# EUROPEAN PATENT APPLICATION

(11) **EP 2 037 526 A1**
(43) Date of publication of application: **18.03.2009**
(21) Application number: 07742765.6
(22) Date of filing: 01.05.2007
(51) Int. Cl.: H01M 8/24, H01M 8/04, H01M 8/10

(54) **FUEL CELL STACK, FUEL CELL SYSTEM, AND FUEL CELL SYSTEM OPERATION METHOD**

(30) Priority: 08.05.2006 JP 2006129257
(71) Applicant: Panasonic Corporation, Kadoma-shi Osaka 571-8501 (JP)
(72) Inventor: UNOKI, Shigeyuki c/o Panasonic Corporation, Chuo-ku, Osaka -shi ,Osaka 540-6207 (JP); KUSAKABE, Hiroki c/oPanasonic Corporation, Osaka 540-6207 (JP)
(74) Representative: Leinweber & Zimmermann
(86) International application number: PCT/JP2007/059330
(87) International publication number: WO 2007/129647

(57) **Abstract**

A fuel cell stack of the present invention includes intermediate current collectors (52, 53) which are disposed in an intermediate portion between a pair of end portion current collectors (50, 51) and are configured to divide anode gas supply manifolds (192I, 392I) and cathode gas supply manifolds (193I, 393I), two or more sub-stacks (P, Q, R) each configured to include one or more unit cells (110, 210, 310) which are stacked between two collectors which are included in a pair of end portion current collectors (50, 51) and the intermediate current collectors (52, 53), anode gas supply inlets (172I, 272I) which are connected to anode gas supply manifolds (192I, 392I) in one of sub-stacks (P, Q, R), and cathode gas supply inlets (173I, 273I) which are connected to cathode gas supply manifolds (193I, 393I) in one of sub-stacks (P, Q, R).

## Description

### Technical Field

The present invention relates to a fuel cell stack, a fuel cell system, and a method of operating the fuel cell system.

### Background Art

Plural kinds of fuel cells have been developed according to the type of electrolyte. In recent years, there has been a tendency that polymer electrolyte fuel cells (hereinafter referred to as PEFCs) are frequently used. The PEFC includes an MEA (Membrane-Electrode-Assembly) and has a configuration in which main surfaces on both sides of the MEA are exposed to an anode gas containing hydrogen and a cathode gas containing oxygen such as air and the anode gas and the cathode gas are caused to electrochemically react with each other, generating electric power and heat. To be specific, the following electrochemical reactions occur. Thereby, hydrogen at the anode side is consumed and water is generated as a reaction product at the cathode side.

**Anode; H₂ → 2H⁺ + 2e⁻** **(1)**

**Cathode; 2H⁺ + (1/2)O₂ + 2e⁻ → H₂O** **(2)**

By the way, the PEFC does not generate a sufficient electromotive force for each cell reaction as compared to general uses. For this reason, the PEFC is typically formed by stacking a plurality of unit cells in which the above reactions occur. A polymer electrolyte fuel cell stack (hereinafter referred to as a stack) having such a stack structure forms a main body of the PEFC. Typically, 10 to 200 cells are stacked in the stack and are sandwiched at both ends of the stacked cells between end plates such that a current collector and an insulating plate are disposed between the associated cell and end plate, and the stacked cells are fastened from both ends by fastener members such as bolts and nuts.

In a side portion of the stack, an anode gas supply manifold, an anode gas discharge manifold, a cathode gas supply manifold, and a cathode gas discharge manifold are provided to extend in a direction in which the unit cells are stacked in the stack. Each of the manifolds is provided with a branch channel connected to the interior of each cell. A branch channel connecting the anode gas supply manifold and the anode gas discharge manifold to each other form an anode gas channel within the cell. A branch channel connecting the cathode gas supply manifold and the cathode gas discharge manifold to each other form a cathode gas channel within the cell.

The fuel cell system using the stack has a supply system and a discharge system for the anode gas and a supply system and a discharge system for the cathode gas. The supply system for the anode gas is connected to an end portion of the anode gas supply manifold and the discharge system for the anode gas is connected to an end portion of the anode gas discharge manifold. In the same manner, the supply system for the cathode gas is connected to an end portion of the cathode gas supply manifold and the discharge system for the cathode gas is connected to an end portion of the cathode gas discharge manifold.

The anode gas supply system typically has a structure for supplying the anode gas comprising hydrogen as a major component and containing water. For example, the anode gas supply system includes a hydrogen gas tank, a humidifier, a pressure-reducing valve, a flow rate control valve, and a pipe coupling these. Or, the anode gas supply system includes a hydrogen generator configured to reform a raw material such as petroleum oil or a natural gas, containing hydrocarbon as a major component, into a gas containing hydrogen as a major component.

Since the anode gas containing hydrogen as the major component is typically a combustible gas, the anode gas discharge system includes a combustor.

The cathode gas supply system has a structure for supplying the cathode gas such as air containing oxygen as a major component. The cathode gas supply system typically includes a blower, a humidifier, and pipes coupling these.

In such a configuration of the fuel cell system, the anode gas is supplied from one end of the anode gas supply manifold to the inside of the stack, branches to flow from the anode gas supply manifold to the cells, and excess anode gases in the cells are gathered in the anode gas discharge manifold and are discharged from an end portion of the anode gas discharge manifold to outside the stack. In the same manner, the cathode gas is supplied from one end of the cathode gas supply manifold, branches to flow from the cathode gas supply manifold to the cells, and excess cathode gases in the cells are gathered in the cathode gas discharge manifold and are discharged from an end portion of the cathode gas discharge manifold to outside the stack.

With regard to flexibility of the fuel cell system including start of power generation and power output control, there is a room for improvement. To be specific, at the start of power generation, the temperature of the MEA within the cell is required to be increased up to a catalytic reaction temperature. Time and energy are needed to increase the temperature of all the cells within the stack.

To maintain efficiency of the energy supplied to outside equipment in a case where a low power output operation of a power generation output or a heat output is carried out in response to a request from a load, it is necessary to reduce the supply amount of the anode gas and the supply amount of the cathode gas. If the supply amount of the anode gas and the supply amount of the cathode gas are reduced, a phenomenon in which the power generation output of the fuel cell system is unstable, i.e., a flooding phenomenon occurs.

Patent document 1 discloses a fuel cell system which includes a plurality of fuel cells having large and small capacities and connected in series and is configured to cause only the fuel cells of the small capacity to generate electric power at the start-up. In the fuel cell system, by combusting the excess anode gas and the excess cathode gas efficiently, the temperature of the fuel cells of the small capacity can be increased, and thereby, the start-up time of the fuel cell system can be shortened.

Patent document 2 discloses a fuel cell system which includes a plurality of fuel cells and is configured to stop a part of the fuel cells during a low power output operation. In the fuel cell system, the power generation output can be reduced without significantly reducing the power generation efficiency and generating corrosion or the like in the fuel cells.

Patent document 3 discloses that a stack of a fuel cell system of the patent document 3 is divided into an anode-side sub-stack, a center portion sub-stack, and a cathode-side sub-stack by current collectors disposed at both ends of the stack and two current collectors disposed in an intermediate position in the direction in which the unit cells are stacked in the stack. The fuel cell system of the patent document 3 includes the stack, a current collector switch connecting the current collectors disposed at both ends of the stack and the current collectors in the intermediate position to a load, a current collector switch control means, and a stack temperature measuring means. The patent document 3 further proposes a power generation method of the fuel cell system in which the current collector switch is controlled using the current collector switch control means so that the center portion sub-stack performs power generation before the anode-side sub-stack and the cathode-side sub-stack start power generation, the temperature of the stack is measured using the temperature measuring means, and the current collector switch is controlled using the current collector switch control means so that the anode-side sub-stack, the cathode-side sub-stack, and the center portion sub-stack generate electric power when the temperature measured by the stack temperature measuring means is a predetermined temperature or higher. Patent document 3 describes that quick and efficient power generation is achieved under temperatures below freezing point according to this power generation method.

Patent document 4 discloses a fuel cell system including a plurality of sub-stacks which are capable of independently supplying an anode gas to an anode.
Patent document 1: Japanese Laid-Open Patent Application Publication No. 2004-39524
Patent document 2: Japanese Laid-Open Patent Application Publication No. Hei. 6-60896
Patent document 3: Japanese Laid-Open Patent Application Publication No. 2006-24559
Patent document 4: Japanese Laid-Open Patent Application Publication No. 2006-147340

### Disclosure of the Invention

### Problems to be Solved by the Invention

However, since the fuel cells systems of the patent documents 1 and 2 require a plurality of fuel cells, the configuration of the fuel cell system becomes intricate and the size of the fuel cell system increases. Therefore, the fuel cell system leaves a room for improvement in achievement of precision, and small-size, i.e., so-called compactness.

The patent document 3 does not disclose or suggest that the fuel cell system has the structure for supplying and discharging the anode gas and the cathode gas. Therefore, it may be considered that the fuel cell system has the same structure as the conventional stack. If so, the anode gas flows from the anode gas supply manifold to the anode gas discharge manifold in the anode-side sub-stack and the cathode gas flows from the cathode gas supply manifold to the cathode gas discharge manifold in the cathode-side sub-stack, even when power generation is carried out only in the center portion sub-stack. Since the power generation does not start yet in the cathode-side sub-stack and in the anode-side sub-stack, the anode gas and the cathode gas flow through the anode-side sub-stack and the cathode-side sub-stack, respectively, without being consumed for the power generation. That is, wasting the anode gas and the cathode gas, and the supply of the anode gas and the cathode gas more than necessary, take place. Therefore, there is a room for improvement in economic efficiency in the fuel cell system at the start of power generation. In addition, since the flow of the anode gas and the flow of the cathode gas rise an electric potential of the MEA within the anode-side sub-stack and a MEA within the cathode-side sub-stack, respectively, performance of the MEA may be degraded.

Patent document 4 merely discloses a start-up method in which the time point when the supply of the anode gas and the supply of the cathode gas start before start of the power generation operation of sub-stacks is start-up time and the sub-stacks are sequentially started-up while connecting the sub-stacks in a series closed circuit manner to suppress voltages generated in the cells at the start-up. That is, patent document 4 describes that during a normal operation, the anode gas and the cathode gas are supplied to all the sub-stacks (the same document [0022]), and therefore, does not disclose or suggest power generation operation under the state where the anode gas and the cathode gas flow in a part of the sub-stacks. The same document discloses that sub-stack in-between lines (designated by 47 to 51 in the same document) are formed between adjacent sub-stacks, and therefore merely substantially discloses the fuel cell system including a plurality of stacks arranged.

As should be appreciated from the above, for the PEFC, a PEFC structure for achieving the flow of the anode gas and the flow of the cathode gas in a part of the stack with a simple structure has not been developed so much thus far. In addition, a technique for controlling the flow of the anode gas and the flow of the cathode gas for each sub-stack to control the power generation output in the power generation operation has not been disclosed or suggested.

The present invention has been developed to solve the above described problems, and an object of the present invention is to provide a fuel cell stack, a fuel cell system, and a method of operating the fuel cell system, which are capable of achieving flow of an anode gas and flow of a cathode gas in a part of the stack with a simple structure so that power generation output is controlled maneuverably and economically while suppressing degradation of a MEA.

### Means for Solving the Problems

To solve the above described problems, a fuel cell stack according to a first invention, having two or more unit cells stacked between a pair of end portion current collectors and an anode gas supply manifold and a cathode gas supply manifold penetrating peripheral portions of the two or more unit cells in a direction in which the unit cells are stacked, comprises one or more intermediate current collectors which are disposed in an intermediate portion between the pair of end portion current collectors in the direction in which the unit cells are stacked and are configured to divide the anode gas supply manifold and the cathode gas supply manifold; two or more sub-stacks each including one or more of the unit cells stacked between two collectors which are included in the pair of end portion current collectors and the intermediate current collectors; one or more anode gas supply inlets which penetrate at least one of both end portions of the fuel cell stack in the direction in which the unit cells are stacked and are connected to the anode gas supply manifold in one of the sub-stacks; and one or more cathode gas supply inlets which penetrate at least one of the both end portions of the fuel cell stack in the direction in which the unit cells are stacked and are connected to the cathode gas supply manifold in one of the sub-stacks.

In such a configuration, since the flow of the anode gas and the flow of the cathode gas are cut off by the intermediate current collector, the anode gas and the cathode gas are allowed to flow only in desired sub-stacks by utilizing a structure of the so-called internal manifold type fuel cell stack. That is, the fuel cell stack of the present invention is capable of controlling a power generation output more maneuverably and economically while suppressing degradation of an MEA.

In the fuel cell stack according to a second invention, the number of the unit cells may be different between the sub-stacks.

In such a configuration, more power generation output levels can be achieved with sub-stacks which are fewer in number. That is, a power generation output can be controlled more maneuverably and economically while suppressing degradation of the MEA.

The fuel cell stack according to a third invention may further comprise a heat transmission medium supply manifold which is configured to penetrate the peripheral portions of the two or more unit cells in the direction in which the unit cells are stacked, and is divided by the intermediate current collectors; and one or more heat transmission medium supply inlets which penetrate at least one of the both end portions of the fuel cell stack in the direction in which the unit cells are stacked and are connected to the heat transmission medium supply manifold in one of the sub-stacks.

In such a configuration, since the flow of the heat transmission medium is cut off by the intermediate current collector, the heat transmission medium is allowed to flow only in desired sub-stacks by utilizing the structure of the so-called internal manifold type fuel cell stack. That is, energy loss in the fuel cell system can be reduced.

The fuel cell stack according to a fourth invention, may further comprise three or more unit cells and a pair of intermediate current collectors, wherein a center portion sub-stack may be disposed between the intermediate current collectors, a pair of end portion sub-stacks may be each disposed between the end portion current collector and the intermediate current collector; an anode gas introduction passage which penetrates a peripheral portion of one of the pair of end portion sub-stacks in the direction in which the unit cells are stacked and is connected to the anode gas supply manifold in the center portion sub-stack; a cathode gas introduction passage which penetrates a peripheral portion of one of the pair of end portion sub-stacks in the direction in which the unit cells are stacked and is connected to the cathode gas supply manifold in the center portion sub-stack; and a heat transmission medium introduction passage which penetrates a peripheral portion of one of the pair of end portion sub-stacks in the direction in which the unit cells are stacked and is connected to the heat transmission medium supply manifold in the center portion sub-stack; wherein three anode gas supply inlets may be connected to the anode gas introduction passage, and the anode gas supply manifolds in the pair of end portion sub-stacks, respectively; wherein three cathode gas supply inlets may be connected to the cathode gas introduction passage, and the cathode gas supply manifolds in the pair of end portion sub-stacks, respectively; and wherein three heat transmission medium supply inlets may be connected to the heat transmission medium introduction passage, and the heat transmission medium supply manifolds in the pair of end portion sub-stacks, respectively.

In such a configuration, since the anode gas, the cathode gas, and the heat transmission medium are allowed to flow independently in the sub-stacks, the power generation output of the fuel cell stack can be controlled more maneuverably and more economically.

The fuel cell stack according to a fifth invention may further comprise three or more unit cells and a pair of intermediate current collectors, wherein a center portion sub-stack may be disposed between the intermediate current collectors, and a pair of end portion sub-stacks may be each disposed between the end portion current collector and the intermediate current collector; an anode gas introduction passage which penetrates a peripheral portion of one of the pair of end portion sub-stacks in the direction in which the unit cells are stacked and is configured to connect the anode gas supply manifold in the center portion sub-stack to the anode gas supply inlet; a cathode gas introduction passage which penetrates a peripheral portion of one of the pair of end portion sub-stacks in the direction in which the unit cells are stacked and is configured to connect the cathode gas supply manifold in the center portion sub-stack to the cathode gas supply inlet; a heat transmission medium introduction passage which penetrates a peripheral portion of one of the pair of end portion sub-stacks in the direction in which the unit cells are stacked and is configured to connect the heat transmission medium supply manifold in the center portion sub-stack to the heat transmission supply inlet; an anode gas supply on-off unit which is disposed in the intermediate current collector and is configured to make connection and disconnection between the anode gas supply manifold in the center portion sub-stack and the anode gas supply manifold in the end portion sub-stack; a cathode gas supply on-off unit which is disposed in the intermediate current collector and is configured to make connection and disconnection between the cathode gas supply manifold in the center portion sub-stack and the cathode gas supply manifold in the end portion sub-stack; and a heat transmission medium supply on-off unit which is disposed in the intermediate current collector and is configured to make connection and disconnection between the heat transmission medium supply manifold in the center portion sub-stack and the heat transmission medium supply manifold in the end portion sub-stack.

In such a configuration, since the anode gas supply inlet, the cathode gas supply inlet, and the heat transmission medium supply inlet can be made single in number, the fuel cell stack of the present invention can be connected to the anode gas supply system, the cathode gas supply system, and the heat transmission medium supply system in the conventional fuel cell system. In other words, the fuel cell stack of the present invention can be used in place of the conventional fuel cell stack. In addition, the supply destination of the anode gas and the supply destination of the cathode gas can be switched in the fuel cell stack, installation requirements of the fuel cell stack can be easily met.

A fuel cell system according to a sixth invention comprises a fuel cell stack according the first invention; an anode gas supply system connected to the anode gas supply inlet; a cathode gas supply system connected to the cathode gas supply inlet; and a controller; wherein the controller is configured to select one or more of the sub-stacks and is configured to control at least one of the anode gas supply system, the cathode gas supply system and the fuel cell stack such that the anode gas and the cathode gas are supplied only to the selected sub-stacks to cause the selected sub-stacks to perform power generation operation.

In such a configuration, the power generation output can be controlled more maneuverably and more economically while suppressing degradation of the MEA, using the fuel cell stack of the first invention.

In the fuel cell system according to a seventh invention, the controller may be configured to select one or more of the sub-stacks based on a magnitude of an external electric power load such that a power generation output is closest to the electric power load and may be configured to control at least one of the anode gas supply system, the cathode gas supply system and the fuel cell stack to switch supply destination of the anode gas and supply destination of the cathode gas, during a power generation operation of the fuel cell system.

In such a configuration, since the power generation output of the fuel cell system can be controlled to a power generation output suitable for the external electric power load, the power generation output can be controlled more maneuverably and more economically while suppressing degradation of the MEA.

In the fuel cell system according to an eighth invention, the fuel cell stack may have three or more unit cells and a pair of intermediate current collectors, a center portion sub-stack may be disposed between the intermediate current collectors, and a pair of end portion sub-stacks may be each disposed between the end portion current collector and the intermediate current collector; and wherein the controller may be configured to control at least one of the anode gas supply system, the cathode gas supply system and the fuel cell stack such that the anode gas and the cathode gas are supplied only to the center portion sub-stack to cause the center portion sub-stack to perform center portion power generation, before supplying the anode gas and the cathode gas to the pair of end portion sub-stacks, after receiving a power generation start command.

In such a configuration, since the power generation operation in the center portion in the fuel cell stack starts preferentially over the end portion power generation, heat generated in the center portion can be used to preheat the end portion sub-stacks. That is, energy efficiency in a period that lapses until the entire stack power generation starts in the fuel cell system can be improved.

In the fuel cell system according a ninth invention, the fuel cell stack may include a heat transmission supply manifold which is configured to penetrate peripheral portions of the two or more unit cells and is divided by the intermediate current collector; and one or more heat transmission medium supply inlets which penetrate at least one of both end portions of the fuel cell stack in the direction in which the unit cells are stacked and are connected to the heat transmission medium supply manifold in one of the sub-stacks; and the fuel cell system may comprise a heat transmission medium supply system connected to the heat transmission medium supply inlet, wherein the controller may be configured to control least one of the anode gas supply system, the cathode gas supply system, the heat transmission medium supply system, and the fuel cell stack such that the heat transmission medium is supplied only to the center portion sub-stack to perform center portion preheating, after receiving the power generation start command; wherein in the center portion preheating, the controller may obtain a discharge temperature of the heat transmission medium discharged from the fuel cell stack and may perform first determination to compare the discharge temperature to a first determination temperature; the controller may supply the anode gas and the cathode gas only to the center portion sub-stack to cause the center portion sub-stack to perform center portion power generation, based on the first determination; in the center portion power generation, the controller may supply the heat transmission medium to an entire of the fuel cell stack such that entire stack preheating is carried out; in the entire stack preheating, the controller may obtain a discharge temperature of the heat transmission medium discharged from the fuel cell stack and may perform second determination to compare the discharge temperature to a second determination temperature; and the controller may supply the anode gas and the cathode gas to the center portion sub-stack and the pair of end portion sub-stacks to cause center portion sub-stack and the pair of the end portion sub-stacks to perform entire stack power generation, based on the second determination.

In such a configuration, since only the center portion sub-stack is preheated, the center portion sub-stack can start power generation earlier. In addition, since the end portion sub-stacks are preheated while continuing the power generation in the center portion sub-stack, transition to the entire stack power generation smoothly takes place.

In the fuel cell system according to a tenth invention, the first determination temperature and the second determination temperature may be supply temperature of the heat transmission medium supplied to the fuel cell stack.

In such a configuration, more appropriate preheating can be carried out.

A method of operating a fuel cell system, according to an eleventh invention, including the fuel cell stack according to the first invention; an anode gas supply system connected to the anode gas supply inlet; and a cathode gas supply system connected to the cathode gas supply inlet; and the method comprises selecting one or more of the sub-stacks and supplying the anode gas and the cathode gas only to the selected sub-stacks by using at least one of the anode gas supply system, the cathode gas supply system, and the fuel cell stack.

In such a configuration, the power generation output can be controlled more maneuverably and more economically while suppressing degradation of the MEA, by using the fuel cell stack of the first invention.

The method of operating the fuel cell system according a twelfth invention, may further comprise during a power generation operation of the fuel cell system, selecting one or more of the sub-stacks based on a magnitude of an external electric power load such that a power generation output is closest to the electric power load, and switching supply destination of the anode gas and supply destination of the cathode gas by using at least one of the anode gas supply system, the cathode gas supply system, and the fuel cell stack.

In such a configuration, since the power generation output of the fuel cell system can be controlled to a power generation output suitable for the external electric power load, the power generation output can be controlled more maneuverably and more economically while suppressing degradation of the MEA.

In the method of operating the fuel cell system according to a thirteenth invention, the fuel cell stack may include three or more unit cells and a pair of intermediate current collectors, wherein a center portion sub-stack may be disposed between the intermediate current collectors, a pair of end portion sub-stacks may be each disposed between the end portion current collector and the intermediate current collector, and the method may further comprise supplying the anode gas and the cathode gas only to the center portion sub-stack by using at least one of the anode gas supply system, the cathode gas supply system, and the fuel cell stack to cause the center portion sub-stack to perform center portion power generation, before supplying the anode gas and the cathode gas to the pair of end portion sub-stacks, after receiving a power generation start command.

In such a configuration, since the power generation operation in the center portion in the fuel cell stack starts preferentially over the power generation operation of the end portion, heat generated in the center portion can be used to preheat the end portion sub-stacks at both sides. That is, energy efficiency in a period that lapses until the entire stack power generation starts in the fuel cell system can be improved.

### Effects of the Invention

As described above, the fuel cell stack, the fuel cell system, and the operation method of the fuel cell system of the present invention provide advantages that the power generation output can be controlled more maneuverably and more economically while suppressing degradation of the MEA.

### Brief Description of the Drawings

[Fig. 1] Fig. 1 is a view showing a stack structure of a fuel cell stack according to a first embodiment of the present invention, as viewed from three directions;
[Fig. 2] Fig. 2 is a partial exploded perspective view schematically showing a structure of one end portion of the stack of Fig. 1;
[Fig. 3] Fig. 3 is a partial exploded perspective view schematically showing a structure of first cells which are stacked in a first sub-stack of Fig. 1;
[Fig. 4] Fig. 4 is a cross-sectional view showing major components of the structure of the cell of Fig. 3;
[Fig. 5] Fig. 5 is an exploded perspective view showing a stacked portion between the first cells in the first sub-stack of Fig. 3;
[Fig. 6] Fig. 6 is a partial exploded perspective view schematically showing a stack structure of second cells which are stacked in a second sub-stack of Fig. 1;
[Fig. 7] Fig. 7 is an exploded perspective view showing a stacked portion between the second cells in the second sub-stack of Fig. 6;
[Fig. 8] Fig. 8 is a partial exploded perspective view schematically showing a stack structure of third cells which are stacked in a third sub-stack of Fig. 1;
[Fig. 9] Fig. 9 is an exploded perspective view showing a stacked portion between the third cells in the third sub-stack of Fig. 8;
[Fig. 10] Fig. 10 is a perspective view schematically showing a structure of a first intermediate current collector of Fig. 1;
[Fig. 11] Fig. 11 is a perspective view schematically showing a structure of a second intermediate current collector of Fig. 1;
[Fig. 12] Fig. 12 is a view schematically showing a configuration of a fuel cell system using the stack of Fig. 1;
[Fig. 13] Fig. 13 is a flowchart showing an operation of the fuel cell system of Fig. 12;
[Fig. 14] Fig. 14 is a flowchart showing an operation for switching from an entire stack power generation operation to a center portion power generation operation in the fuel cell system of Fig. 12;
[Fig. 15] Fig. 15 is a flowchart showing an example for determining whether or not preheating is completed before start of the center portion power generation, according to the second embodiment of the present invention;
[Fig. 16] Fig. 16 is a flowchart showing an example for determining whether or not preheating is completed before start of the entire stack power generation, according to the third embodiment of the present invention;
[Fig. 17] Fig. 17 is a view showing a stack structure of a fuel cell stack according to a fourth embodiment of the present invention, as viewed from three directions;
[Fig. 18] Fig. 18 is a view showing a stack structure of a fuel cell stack according to a fifth embodiment of the present invention, as viewed from three directions;
[Fig. 19] Fig. 19 is a plan view schematically showing inner surfaces of an anode separator and a cathode separator of Fig. 18;
[Fig. 20] Fig. 20 is a view schematically showing a configuration of a fuel cell system using the stack of Fig. 18;
[Fig. 21] Fig. 21 is an output view schematically showing an output variation pattern of the fuel cell system of Fig. 20;
[Fig. 22] Fig. 22 is a view showing a stack structure of a fuel cell stack according to a sixth embodiment of the present invention, as viewed from three directions; and
[Fig. 23] Fig. 23 is a view showing a stack structure of a fuel cell stack according to a seventh embodiment of the present invention, as viewed from three directions.

### Description of Reference Numerals

- 1: polymer electrolyte membrane
- 2A: 2A anode-side catalyst layer
- 2C: 2C cathode-side catalyst layer
- 4A: 4A anode-side gas diffusion layer
- 4C: 4C cathode-side gas diffusion layer
- 5: 5 membrane-electrode assembly (MEA)
- 12E, 22E, 32E: anode gas discharge manifold hole
- 13E, 23E, 33E: cathode gas discharge manifold hole
- 14E, 24E, 34E: heat transmission medium discharge manifold hole
- 15: 15 bolt hole
- 16: first gasket
- 17: first MEA component
- 19A: first anode separator
- 19C: first cathode separator
- 21: anode gas channel groove
- 21A: anode gas reaching portion
- 21B: anode gas inlet portion
- 31: cathode gas channel groove
- 31A: cathode gas reaching portion
- 31B: cathode gas inlet portion
- 26? 36: heat transmission medium channel groove
- 27: second MEA component
- 28: second gasket
- 29A: second anode separator
- 29C: second cathode separator
- 37: third MEA component
- 38: third gasket
- 39A: third anode separator
- 39C: third cathode separator
- 42E: anode gas discharge system
- 43E: cathode gas discharge system
- 44E: heat transmission medium discharge system
- 42I: anode gas supply system
- 43I: cathode gas supply system
- 44I: heat transmission medium supply system
- 42V, 43V, 44V: switch
- 144: first temperature detector
- 244: second temperature detector
- 344: third temperature detector
- 444: fourth temperature detector
- 50, 51: end portion current collector
- 52, 552, 652: first intermediate current collector
- 53, 553, 653: second intermediate current collector
- 52E, 53E, 54E, 62E, 63E, 64E, 152I, 153I,:
- 154I, 162I, 163I, 164I, 212I, 213I, 214I:
- , 222I, 223I, 224I, 232I, 233I, 234I, 252I,:
- 253I, 254I, 262I, 263I, 264I, 352I, 353I,:
- 354I, 362I, 363I, 364I, 522I, 523I,:
- 524I, 532I, 533I, 534I: through-hole
- 56: bearing member
- 57: valve plug
- 58: valve shaft
- 59: terminal
- 60, 61: insulating plate
- 70, 71: end plate
- 72E: anode gas discharge outlet
- 73E: cathode gas discharge outlet
- 74E: heat transmission medium discharge outlet
- 172I: first anode gas supply inlet
- 173I: first cathode gas supply inlet
- 174I: first heat transmission medium supply inlet
- 272I: second anode gas supply inlet
- 273I: second cathode gas supply inlet
- 274I: second heat transmission medium supply inlet
- 372I: third anode gas supply inlet
- 373I: third cathode gas supply inlet
- 374I: third heat transmission medium supply inlet
- 82: fastener member
- 82B: bolt
- 82W: washer
- 82N: nut
- 93: nozzle
- 92E: anode gas discharge manifold
- 93E: cathode gas discharge manifold
- 94E: heat transmission medium discharge manifold
- 112I, 122I, 132I: first anode gas supply manifold hole
- 113I, 123I, 133I: first cathode gas supply manifold hole
- 114I, 124I, 134I: first heat transmission medium supply manifold hole
- 182I: anode gas supply on-off unit
- 192I: first anode gas supply manifold
- 183I: cathode gas supply on-off unit
- 193I: first cathode gas supply manifold
- 184I: heat transmission medium supply on-off unit
- 194I: first heat transmission medium supply manifold
- 282I: anode gas introduction on-off unit
- 283I: cathode gas introduction on-off unit
- 284I: heat transmission medium introduction on-off unit
- 292I: anode gas introduction passage (first anode gas introduction passage)
- 293I: cathode gas introduction passage (first cathode gas introduction passage)
- 294I: heat transmission medium introduction passage (first heat transmission medium introduction passage)
- 312I, 322I, 332I: second anode gas supply manifold hole
- 313I, 323I, 333I: second cathode gas supply manifold hole
- 314I, 324I, 334I: second heat transmission medium supply manifold hole
- 392I: second anode gas supply manifold
- 393I: second cathode gas supply manifold
- 394I: second heat transmission medium supply manifold
- 492I: second anode gas introduction passage
- 493I: second cathode gas introduction passage
- 494I: second heat transmission medium introduction passage
- 412I, 422I, 432I: third anode gas supply manifold hole
- 413I, 423I, 433I: third cathode gas supply manifold hole
- 414I, 424I, 434I: third heat transmission medium supply manifold hole
- 592I: third anode gas supply manifold
- 593I: third cathode gas supply manifold
- 594I: third heat transmission medium supply manifold
- 100, 500, 600: stack
- 110: first cell
- 210: second cell
- 310: third cell
- 200: controller
- 501V, 502V, 503V, 504V, 505V, 506V, 507V, 508V, 509V: valve
- A: anode gas
- C: cathode gas
- W: heat transmission medium
- D: power generation output
- P: first sub-stack
- Q: second sub-stack
- R: third sub-stack
- S1 to S7, S31, S61, S101, S102: step

### Best Mode for Carrying Out the Invention

Hereinafter, embodiments of the present invention will be described with reference to the drawings.

### (Embodiment 1)

Hereinafter, best mode for carrying out the present invention will be described with reference to the drawings.

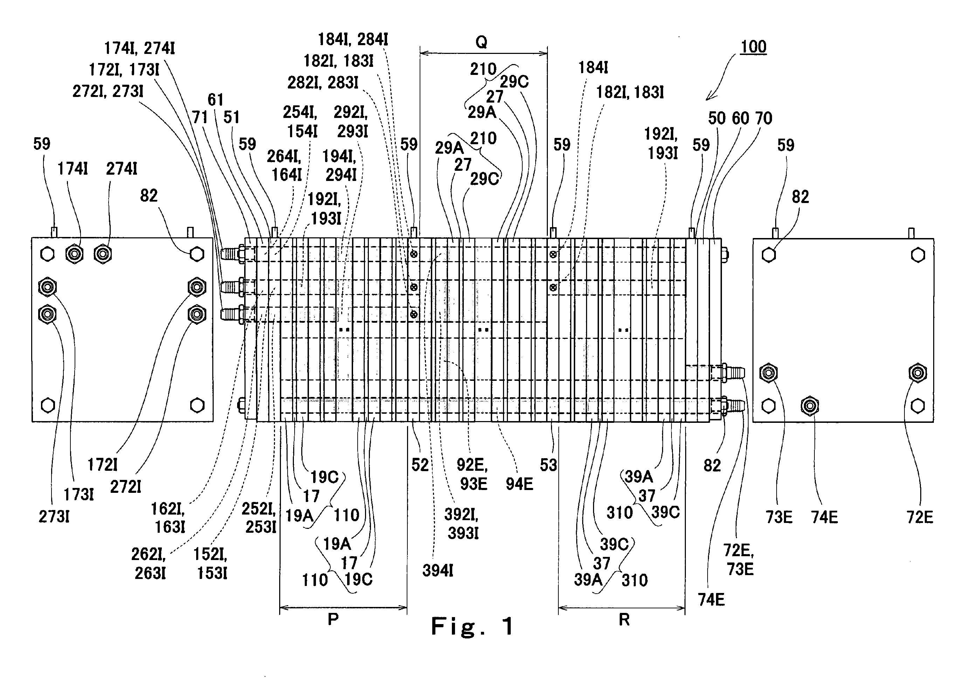

Fig. 1 is a view showing a stack structure of the fuel cell stack according to the first embodiment of the present invention, as viewed from three directions.

The fuel cell stack (hereinafter referred to as a stack) 100 is used in fuel cell systems in household cogeneration systems, motorcycles, electric cars, hybrid electric cars, household appliances, and portable electric devices such as portable computer devices, cellular phones, portable acoustic devices, or portable information terminals.

As shown in Fig. 1, the stack 100 includes first cells (unit cells) 110, second cells 210 and third cells 310 which are in a sandwiching form and are stacked between an end plate 70, an insulating plate 60 and an end portion current collector 50, and an end plate 71, an insulating plate 61, and an end portion current collector 51. The stack 100 has a rectangular parallelepiped shape. The stack 100 is fastened by fastener members 82. The first cell 110 has a structure in which a first MEA component 17 is sandwiched between a first anode separator 19A and a first cathode separator 19C. In the same manner, the second cell 210 has a structure in which a second MEA component 27 is sandwiched between a second anode separator 29A and a second cathode separator 29C. In the same manner, the third cell 310 has a structure in which a third MEA component 37 is sandwiched between a third anode separator 39A and a third cathode separator 39C.

The stack 100 includes a first intermediate current collector 52 and a second intermediate current collector 53 which are disposed in an intermediate portion in the direction in which the cells 110, 210, and 310 are stacked and are configured to divide an anode gas supply manifold and a cathode gas supply manifold. And, a first sub-stack P(end portion sub-stack) P is disposed between the end portion current collector 51 and the first intermediate current collector 52, a second sub-stack (center portion sub-stack) Q is disposed between the first intermediate current collector 52 and the second intermediate current collector 53, and a third sub-stack (end portion sub-stack) R is disposed between the second intermediate current collector 53 and the end portion current collector 50. The first cells 110 are stacked in the first sub-stack P. The second cells 210 are stacked in the second sub-stack Q. The third cells 310 are stacked in the third sub-stack R. The number of the cells forming the first sub-stack, the number of the cells forming the second sub-stack, and the number of the cells forming the third sub-stack may be different from each other. To be specific, the number of the second cells 210 stacked in the second sub-stack Q can be adjusted to be adapted to an actual low power output operation of the stack 100. The total number of the cells 110 and 310 in the first sub-stack P and the third sub-stack R can be adjusted to be adapted to the entire power output of the stack 100. The number of the cells 110 stacked in the first sub-stack P and the number of the cells 310 in the third sub-stack R can be adjusted so that a temperature deviation is small according to an actual temperature deviation in the direction in which the cells are stacked in the stack 100 in an initial stage of start of power generation or during the power generation operation. For example, the number of the first cells 110 stacked in the first sub-stack P may be set to 20, the number of the second cells 210 stacked in the second sub-stack Q may be set to 10, and the number of the third cells 310 stacked in the third sub-stack R may be set to 20.

The stack 100 is so-called internal manifold type stack and is provided with anode gas supply manifolds 192I and 392I, cathode gas supply manifolds 193I and 393I, heat transmission medium supply manifolds 194I and 394I, an anode gas discharge manifold 92E, a cathode gas discharge manifold 93E, and a heat transmission medium discharge manifold 94E which penetrate the peripheral portions of the cells in the direction in which the cells are stacked.

The anode gas supply manifold is divided by the first intermediate current collector 52 and the second intermediate current collector 53 into the first anode gas supply manifolds 192I in the first sub-stack P and the third sub-stack R, and the second anode gas supply manifold 392I in the second sub-stack Q. Anode gas supply on-off units 182I in the first and second intermediate current collectors 52 and 53 connect and disconnect these manifolds. The second anode gas supply manifold 392I is formed to be connectable to both the first anode gas supply manifold 192I and an anode gas introduction passage 292I to be described later. In the present embodiment, an end surface of the second anode gas supply manifold 392I on the first intermediate current collector 52 side is formed to face an end surface of the first anode gas supply manifold 192I on the first intermediate current collector 52 side and an end surface of the anode gas introduction passage 292I on the first intermediate current collector 52 side in the first sub-stack P, with the first intermediate current collector 52 interposed between them. Also, an end surface of the second anode gas supply manifold 392I on the second intermediate current collector 53 side is formed to face an end surface of the first anode gas supply manifold 192I on the second intermediate current collector 53 side in the third sub-stack R, with the second intermediate current collector 53 interposed between them.

The cathode gas supply manifold is divided by the first intermediate current collector 52 and the second intermediate current collector 53 into the first cathode gas supply manifolds 193I in the first sub-stack P and the third sub-stack R, and the second cathode gas supply manifold 393I in the second sub-stack Q. Cathode gas supply on-off units 183I in the first and second intermediate current collectors 52 and 53 connect and disconnect these manifolds. The second cathode gas supply manifold 393I is formed to be connectable to both the first cathode gas supply manifold 193I and a cathode gas introduction passage 293I to be described later. In the present embodiment, an end surface of the second cathode gas supply manifold 393I on the first intermediate current collector 52 side is formed to face an end surface of the first cathode gas supply manifold 193I on the first intermediate current collector 52 side and an end surface of the cathode gas introduction passage 293I on the first intermediate current collector 52 side in the first sub-stack P, with the first intermediate current collector 52 interposed between them. Also, an end surface of the second cathode gas supply manifold 393I on the second intermediate current collector 53 side is formed to face an end surface of the first cathode gas supply manifold 193I on the second intermediate current collector 53 side in the third sub-stack R, with the second intermediate current collector 53 interposed between them.

The heat transmission medium supply manifold is divided by the first intermediate current collector 52 and the second intermediate current collector 53 into the first heat transmission medium supply manifolds 194I in the first sub-stack P and the third sub-stack R, and the second heat transmission medium supply manifold 394I in the second sub-stack Q. Heat transmission medium supply on-off units 184I in the first and second intermediate current collectors 52 and 53 connect and disconnect these manifolds. The second heat transmission medium supply manifold 394I is formed to be connectable to both the first heat transmission medium supply manifold 194I and a heat transmission medium introduction passage 294I to be described later. In the present embodiment, an end surface of the second heat transmission medium supply manifold 394I on the first intermediate current collector 52 side is formed to face an end surface of the first heat transmission medium supply manifold 194I on the first intermediate current collector 52 side and an end surface of the heat transmission medium introduction passage 294I on the first intermediate current collector 52 side in the first sub-stack P, with the first intermediate current collector 52 interposed between them. Also, an end surface of the second heat transmission medium supply manifold 394I on the second intermediate current collector 53 side is formed to face an end surface of the first heat transmission medium supply manifold 194I on the second intermediate current collector 53 side in the third sub-stack R, with the second intermediate current collector 53 interposed between them.

The anode gas introduction passage 292I in the first sub-stack P penetrates the peripheral portion of the first sub-stack P in the direction in which the cells are stacked and is connected to the second anode gas supply manifold 392I. In the present embodiment, an anode gas introduction on-off unit 282I is disposed in a through-hole 252I in the first intermediate current collector 52. The on-off unit 282I is configured to open and close to connect and disconnect the anode gas introduction passage 292I and the second anode gas supply manifold 392I.

The cathode gas introduction passage 293I in the first sub-stack P penetrates the peripheral portion of the first sub-stack P in the direction in which the cells are stacked and is connected to the second cathode gas supply manifold 3931. In the present embodiment, a cathode gas introduction on-off unit 283I is disposed in a through-hole 253I in the first intermediate current collector 52. The on-off unit 283I is configured to open and close to connect and disconnect the cathode gas introduction passage 293I and the second cathode gas supply manifold 393I.

The heat transmission medium introduction passage 294I in the first sub-stack P penetrates the peripheral portion of the first sub-stack P in the direction in which the cells are stacked and is connected to the second heat transmission medium supply manifold 394I. In the present embodiment, a heat transmission medium introduction on-off unit 284I is disposed in a through-hole 254I in the first intermediate current collector 52. The on-off unit 284I is configured to open and close to connect and disconnect the heat transmission medium introduction passage 294I and the second heat transmission medium supply manifold 394I.

The end plate 71 in the stack 100 is provided with six supply inlets. To be specific, a first anode gas supply inlet 172I connected to the first anode gas supply manifold 192I in the first sub-stack P, a second anode gas supply inlet 272I formed in a penetrating portion of the anode gas introduction passage 292I in the first sub-stack P, a first cathode gas supply inlet 173I connected to the first cathode gas supply manifold 193I in the first sub-stack P, a second cathode gas supply inlet 273I formed in a penetrating portion of the cathode gas introduction passage 293I in the first sub-stack P, a first heat transmission medium supply inlet 174I connected to the first heat transmission medium supply manifold in the first sub-stack P, and a second heat transmission medium supply inlet 274I formed in a penetrating portion of the heat transmission medium introduction passage 294I in the first sub-stack P are formed.

The supply inlets 172I, 173I, and 1734 are formed in the first anode gas supply manifold 192I, the first cathode gas supply manifold 193I, and the first heat transmission medium supply manifold 194I, respectively. Because of such a configuration, it is not necessary to supply the anode gas, the cathode gas, and the heat transmission medium to the first sub-stack P and to the third sub-stack R via the anode gas introduction passage 292I, the cathode gas introduction passage 293I, and the heat transmission medium introduction passage 294I. Therefore, the channel cross-sectional area of the anode gas introduction passage 292I, the channel cross-sectional area of the cathode gas introduction passage 293I, and the channel cross-sectional area of the heat transmission medium introduction passage 294I can be reduced in size to an extent that the gases and the heat transmission medium are allowed to flow with a flow rate required for power generation in the second sub-stack Q. That is, the structure of stack 100 can be made compact.

The end plate 70 in the stack 100 is provided with three supply inlets. To be specific, an anode gas discharge outlet 72E connected to the anode gas discharge manifold 92E in the third sub-stack R, a cathode gas discharge outlet 73E connected to the cathode gas discharge manifold 93E in the third sub-stack R, and a heat transmission medium discharge outlet 74E connected to the heat transmission medium discharge manifold 94E in the third sub-stack R are formed. With such a configuration, the anode gas, the cathode gas, and the heat transmission medium within the stack 100 can be discharged to outside.

Subsequently, a structure of the stack end portion of the stack 100 will be described.

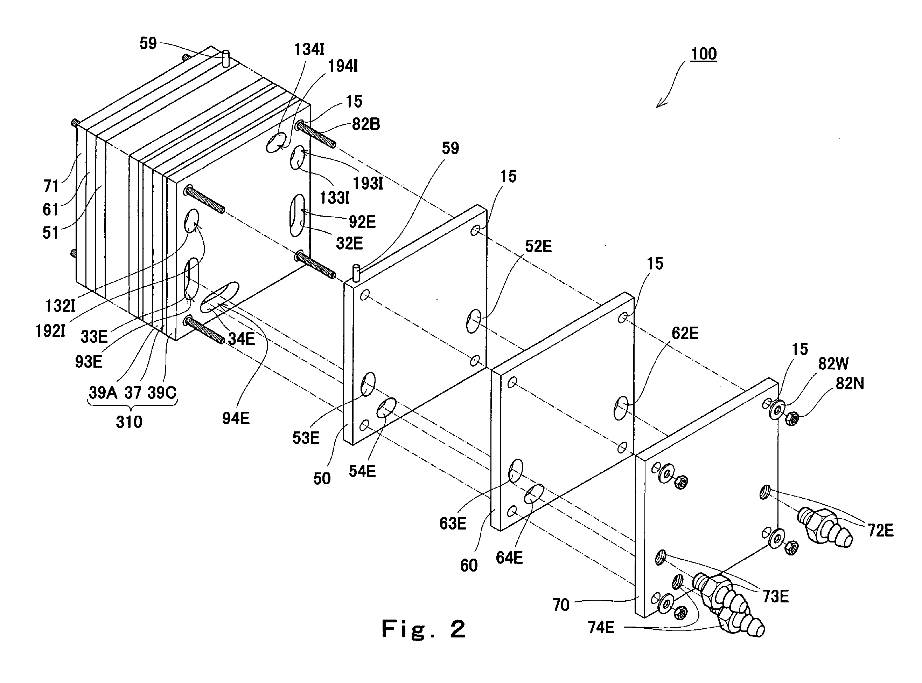

Fig. 2 is a partially exploded perspective view schematically showing a structure of one end portion of the stack of Fig. 1.

The fastener member 82 includes bolts 82B, washers 82W, and nuts 52N. Bolt holes 15 are formed at four corners on rectangular flat surfaces of the end portion current collectors 50 and 51, the intermediate current collectors 52 and 53, the insulating plates 60 and 61, the end plates 70 and 71, and the first to third cells 110, 210, and 310 so as to extend in the direction in which the cells are stacked. The bolts 82B are inserted into the bolt holes 15 and penetrate between both ends of the stack 100. The washers 82W and the nuts 82 N are mounted to both ends of the bolts 82B.

Alternatively, the fastener member 80 may be formed by sandwiching an elastic body between the washer and the end plate. In a further alternative, edge portions of the end plates 70 and 71 may be extended so that the bolts 82B do not penetrate the stack 100 but extend laterally of the stack 100 in parallel.

The insulating plates 60 and 61 and the end plates 70 and 71 are made of electrically-conductive materials. The end portion current collectors 50 and 51 are made of an electrically-conductive material such as copper, and are respectively provided with terminals 59.

The anode gas discharge outlet 72E, the cathode gas discharge outlet 73E, and the heat transmission medium discharge outlet 74E are formed by members connectable to external pipes. In the present embodiment, as shown in the Figures, each discharge outlet includes a through-hole and a nozzle attached to the through-hole. The nozzle may be replaced by a known means such as a valve or a hexagon cap nut. In the end plate 71, the first and second anode gas supply inlets 172I and 272I, the first and second cathode gas supply inlets 173I and 273I, and the first and second heat transmission medium supply inlets 174I and 274I are configured in the same manner (see Fig. 1).

The insulating plate 60 is provided with through-holes 62E, 63E, and 64E which are connected to the discharge outlets 72E, 73E, and 74E, respectively, and penetrate in the direction in which the cells are stacked. The insulating plate 61 is provided with through-holes 162I, 163I, 164I, 262I, 263I, and 264I which are connected to the supply inlets 172I, 173I, 174I, 272I, 273I, and 274I, respectively, and penetrate in the direction in which the cells are stacked (see Fig. 1).

The end portion current collector 50 is provided with a through-hole 52E connecting a through-hole 62E of the insulating plate 60 to the anode gas discharge manifold 92E, a though hole 53E connecting a through-hole 63E of the insulating plate 60 to the cathode gas discharge manifold 93E, and a through-hole 54E connecting a through-hole 64E of the insulating plate 60 to the heat transmission medium discharge manifold 94E so as to penetrate in the direction in which the cells are stacked. The end portion current collector 51 is provided with through-holes 152I, 153I, 154I, 252I, 253I, and 254I respectively connecting supply inlets 172I, 173I, 174I, 272I, 273I and 274I to the supply manifolds 192I, 193I, and 194I and the introduction passages 292I, 293I, and 294I, respectively (see Fig. 1).

Since the through-holes connected to the anode gas discharge manifold 92E, the cathode gas discharge manifold 93E, and the heat transmission medium discharge manifold 94E in the first sub-stack P are not formed on the current collector 51, the current collector 51 forms a closing end for these discharge manifolds. Likewise, since through-holes connected to the first anode gas supply manifold 192I, the first cathode gas supply manifold 193I, and the first heat transmission medium supply manifold 194I in the third sub-stack R are not formed on the current collector 50, the current collector 50 forms a closing end for these supply manifolds.

As shown in Fig. 2, the heat transmission medium channel groove 36 is not formed on an outer surface of the third cathode separator 39C of the third cell 310 which is located at an outermost end of the third sub-stack R. In addition, the heat transmission medium channel groove is not formed on an outer surface of the first anode separator which is located at an outermost end of the first sub-stack, although not shown.

Subsequently, a structure of the first cell 110 in the first sub-stack P will be described.

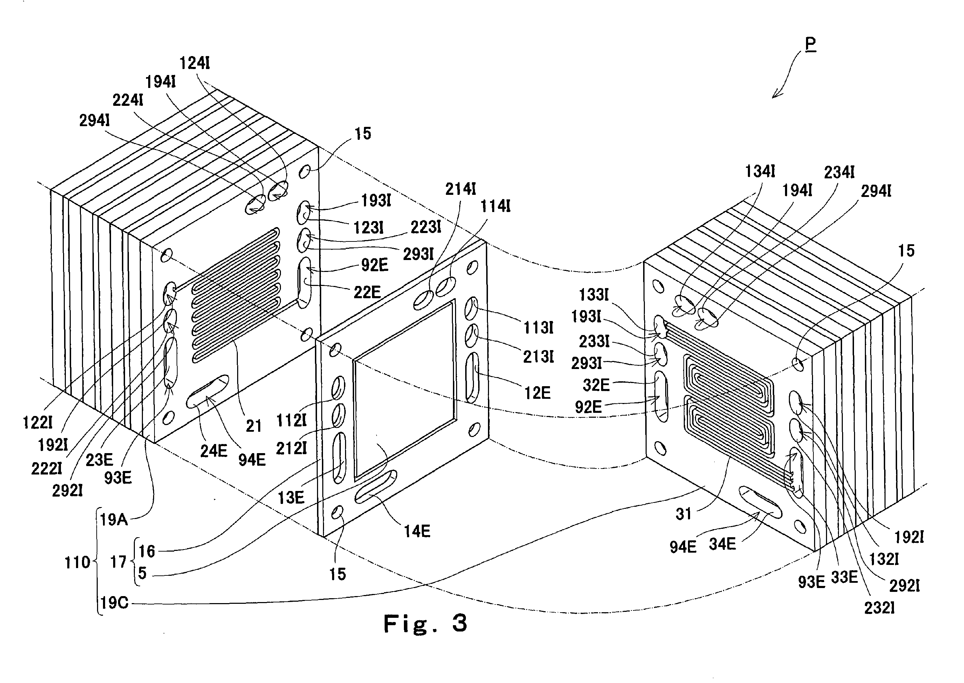

Fig. 3 is a partially exploded perspective view schematically showing a structure of the first cells which are stacked in the first sub-stack of Fig. 1.

As shown in Fig. 3, the first cell 110 has a structure in which a first MEA component 17 is sandwiched between a pair of first anode separator 19A of a flat plate shape and first cathode separator 19C of a flat plate shape(these are collectively referred to as separators).

A first anode gas supply manifold hole 122I, a first cathode gas supply manifold hole 123I, a first heat transmission medium supply manifold hole 124I, an anode gas discharge manifold hole 22E, a cathode gas discharge manifold hole 23E, a heat transmission medium discharge manifold hole 24E, and through-holes 222I, 223I, and 224I are formed to penetrate the peripheral portion of the first anode separator 19A in the direction in which the cells are stacked.

A first anode gas supply manifold hole 132I, a first cathode gas supply manifold hole 133I, a first heat transmission medium supply manifold hole 134I, an anode gas discharge manifold hole 32E, a cathode gas discharge manifold hole 33E, a heat transmission medium discharge manifold hole 34E, and the through-holes 232I, 233I, and 234I are formed to penetrate the peripheral portion of the first cathode separator 19C in the direction in which the cells are stacked.

The first anode gas supply manifold hole 112I, the first cathode gas supply manifold hole 113I, the first heat transmission medium supply manifold hole 114I, the anode gas discharge manifold hole 12E, the cathode gas discharge manifold hole 13E, the heat transmission medium discharge manifold hole 14E, and the through-holes 212I, 213I, and 214I are formed to penetrate the peripheral portion of the first MEA component 17 in the direction in which the cells are stacked.

In the first sub-stack P, the first anode gas supply manifold holes 112I, 122I, and 132I are connected to each other to form the first anode gas supply manifold 192I.

In the first sub-stack P, the first cathode gas supply manifold holes 113I, 123I, and 133I are connected to each other to form the first cathode gas supply manifold 193I.

In the first sub-stack P, the first heat transmission medium supply manifold holes 114I, 124I, and 134I are connected to each other to form the first heat transmission medium supply manifold 194I.

In the first sub-stack P, the through-holes 212I, 222I, and 232I are connected to each other to form the anode gas introduction passage 292I.

In the first sub-stack P, the through-holes 213I, 223I, and 233I are connected to each other to form the cathode gas introduction passage 2931.

In the first sub-stack P, the through-holes 214I, 224I, and 234I are connected to each other to form the heat transmission medium introduction passage 294I.

In the first sub-stack P, the anode gas discharge manifold holes 12E, 22E, and 32E are connected to each other to form the anode gas discharge manifold 92E.

In the first sub-stack P, the cathode gas discharge manifold holes 13E, 23E, and 33E are connected to each other to form the cathode gas discharge manifold 93E.

In the first sub-stack P, the heat transmission medium discharge manifold holes 14E, 24E, and 34E are connected to each other to form the heat transmission medium discharge manifold 94E.

The first anode gas supply manifold 192I and the anode gas introduction passage 292I are formed to extend in parallel and in close proximity to each other. This enables the first anode gas supply manifold 192I and the anode gas introduction passage 292I to easily communicate with the second anode gas supply manifold 392I in the second sub-stack Q to be described later.

The first cathode gas supply manifold 193I and the cathode gas introduction passage 293I are formed to extend in parallel and in close proximity to each other. This enables the first cathode gas supply manifold 193I and the cathode gas introduction passage 293I to easily communicate with the second cathode gas supply manifold 393I in the second sub-stack Q to be described later.

The first heat transmission medium supply manifold 194I and the heat transmission medium introduction passage 294I are formed to extend in parallel and in close proximity to each other. This enables the first heat transmission medium supply manifold 194I and the heat transmission medium introduction passage 294I to easily communicate with the second heat transmission medium supply manifold 394I in the second sub-stack Q to be described later.

On an inner surface of the first anode separator 19A, an anode gas channel groove (anode gas channel) 21 is formed to connect the first anode gas supply manifold hole 122I to the anode gas discharge manifold hole 22E. The anode gas channel groove 21 is formed in a serpentine shape in a region of the first anode separator 19A with which the MEA 5 is in contact, in an assembled state of the first cell 110. On an inner surface of the first cathode separator 19C, cathode gas channel grooves (cathode gas channels) 31 are formed to connect the first cathode gas supply manifold hole 133I to the cathode gas discharge manifold hole 33E. The cathode gas channel grooves 31 are formed in a serpentine shape in a region of the first cathode separator 19C with which the MEA 5 is in contact, in an assembled state of the first cell 110. With such a structure, the anode gas in the first anode gas supply manifold 192I is supplied to the inside of the first cell 110 and the cathode gas in the first cathode gas supply manifold 193I is supplied to the inside of the first cell 110.

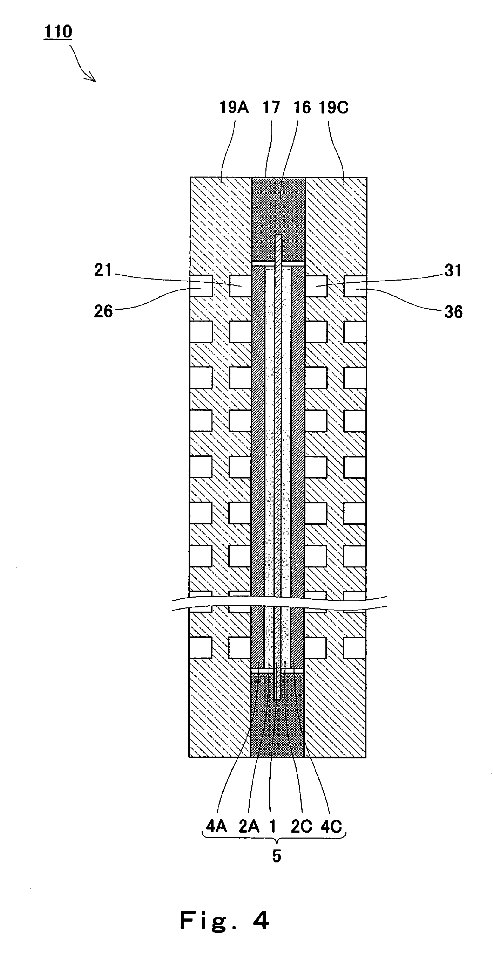

A structure of a reaction portion which is common in the inside of the first cell, the inside of the second cell, and the inside of the third cell, will be described. Fig. 4 is a cross-sectional view showing major components of the structure of the cell of Fig. 3. Whereas the first cell 110 is illustrated in Fig. 4, the second cell 210 and the third cell 310 have the same structure.

The first MEA component 17 has a structure in which a portion of the polymer electrolyte membrane extending in a peripheral portion of the MEA 5 is sandwiched between a pair of first gaskets (frame members) 16. Therefore, both surfaces of the MEA 5 are exposed within a center opening (within inner periphery) of the first gasket 16. The first gaskets 16 are made of an elastic material having resistance to environment. For example, a suitable material for the first gaskets 16 is fluorine-based rubber.

The MEA 5 includes the polymer electrolyte membrane 1 and a pair of electrodes stacked on both surfaces thereof. To be specific, the MEA 5 includes the polymer electrolyte membrane 1 formed of an ion exchange membrane which allows hydrogen ions to selectively permeate, and the pair of electrode layers formed on both surfaces of a region inward of the peripheral portion of the polymer electrolyte membrane 1. The anode-side electrode layer includes an anode-side catalyst layer 2A disposed on one surface of the polymer electrolyte membrane 1, and an anode-side gas diffusion layer 4A disposed on an outer surface of the anode-side catalyst layer 2A. The cathode-side electrode layer includes a cathode-side catalyst layer 2C disposed on the other surface of the polymer electrolyte membrane 1, and a cathode-side gas diffusion layer 4C disposed on an outer surface of the cathode-side catalyst layer 2C. The catalyst layers 2A and 2C are mainly made of carbon powder carrying platinum-based metal catalyst. The gas diffusion layers 4A and 4C have a porous structure having gas permeability and electron conductivity.

As the polymer electrolyte membrane 1, a membrane made of perfluorosulfonic acid is suitably used. For example, Nafion (registered mark) membrane produced by DuPont Co. Ltd. is used. The MEA 5 is generally manufactured by, for example, a method of sequentially applying the catalyst layers 2A and 2C and the gas diffusion layers 4a and 4C, transfer printing and hot pressing, etc, of them, onto the polymer electrolyte membrane. Alternatively, a commercially available product of the MEA 5 which is manufactured in this way may be used.

The first anode separator 19A and the first cathode separator 19C (hereinafter collectively referred to as separators) are made of an electrically-conductive material. The separators are formed of, for example, a graphite plate, a graphite plate impregnated with phenol resin, or a metal plate. The electric energy generated in the MEA 5 conduct the gas diffusion layers 4A and 4C and the separators 19A and 19C, and therefore are taken out to outside.

Since the MEA component 17 is in contact with the inner surface of the first anode separator 19A and the inner surface of the first cathode separator 19C, it serves as a lid for the anode gas channel groove 21 and the cathode gas channel grooves 31. In addition, the anode-side gas diffusion layer 4A of the MEA 5 is in contact with a center region of the inner surface of the first anode separator 19A. In other words, the anode gas channel groove 21 of the first anode separator 19A is in contact with the anode-side gas diffusion layer 4A. Thereby, without leakage to outside, the anode gas flowing within the anode gas channel groove 21 enters the inside of the anode-side gas diffusion layer 4A having the porous structure while being diffused and reaches the anode-side catalyst layer 2A. In the same manner, the cathode gas channel grooves 31 of the first cathode separator 19C are in contact with the cathode-side gas diffusion layer 4C. Thereby, without leakage to outside, the cathode gas flowing within the cathode gas channel grooves 31 enters the inside of the cathode-side gas diffusion layer 4C having the porous structure while being diffused and reaches the cathode-side catalyst layer 2C. Thereby, the cell reaction can occur.

Subsequently, a stacked portion (heat transmission portion) between the first cells 110 in the first sub-stack P will be described.

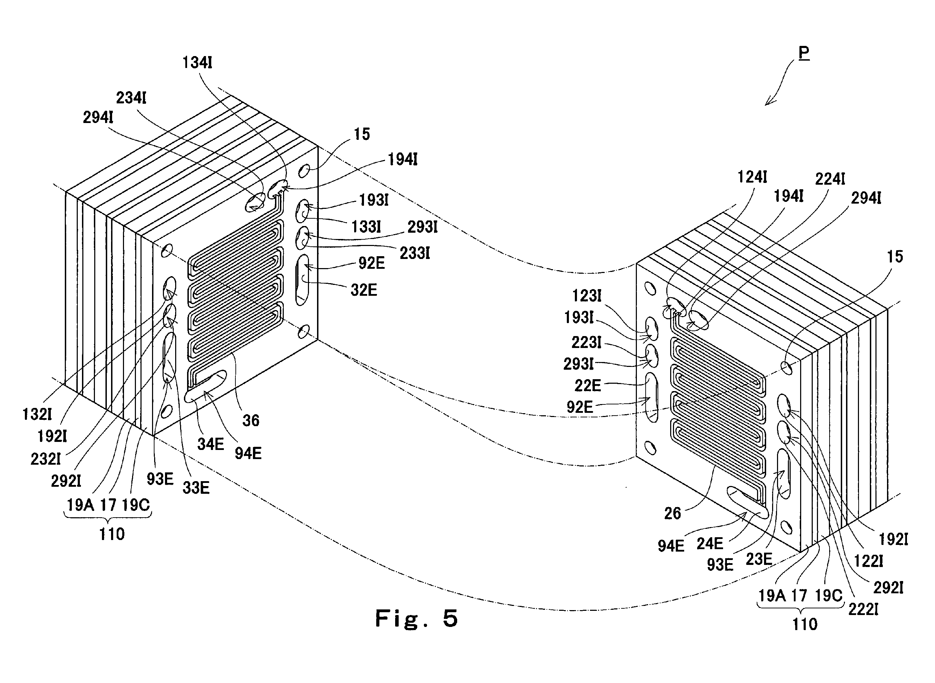

Fig. 5 is an exploded perspective view showing the stacked portion between the first cells in the first sub-stack of Fig. 3.

As shown in Fig. 5, on an outer surface of the first anode separator 19A, heat transmission medium channel grooves (heat transmission medium channels) 26 are formed to connect the first heat transmission medium supply manifold hole 124I to the heat transmission medium discharge manifold hole 24E. The heat transmission medium channel grooves 26 are formed in a serpentine shape so as to serpentine over the entire center region of the outer surface. In the same manner, on an outer surface of the first cathode separator 19C, heat transmission medium channel grooves (heat transmission medium channels) 36 are formed to connect the first heat transmission medium supply manifold hole 134I to the heat transmission medium discharge manifold hole 34E. The heat transmission medium channel grooves 36 are formed in a serpentine shape so as to serpentine over the entire center region of the outer surface. In the stacked state of the first cells 110, the heat transmission channel grooves 26 and the heat transmission channel grooves 36 are joined to each other to form a heat transmission medium channel including the heat transmission medium channel grooves 26 and the heat transmission medium channel grooves 36. The outer surface of the first anode separator 19A and the outer surface of the first cathode separator 19C are formed to seal surrounding regions of the heat transmission medium channel grooves 26 and 36 with a heat-resistant seal structure (not shown). With such a structure, the heat transmission medium flows in the stacked portion without leakage to outside while carrying out heat exchange with the first cell 110 better.

Subsequently, the structure of the second cell 210 in the second sub-stack Q will be described.

In the second sub-stack Q, the second anode gas supply manifold 392I is formed so as to be located on an extended line of the first anode gas supply manifold 192I and the anode gas introduction passage 292I in the first sub-stack P, the second cathode gas supply manifold 393I is formed so as to be located on an extended line of the first cathode gas supply manifold 193I and the cathode gas introduction passage 293I in the first sub-stack P, and the second heat transmission medium supply manifold 394I is formed so as to be located on an extended line of the first heat transmission medium supply manifold 194I and the heat transmission medium introduction passage 294I in the first sub-stack P. The second cell 210 has a structure formed by altering the structure of the first cell 110. Hereinafter, a difference between the second cell 210 and the first cell 110 will be described.

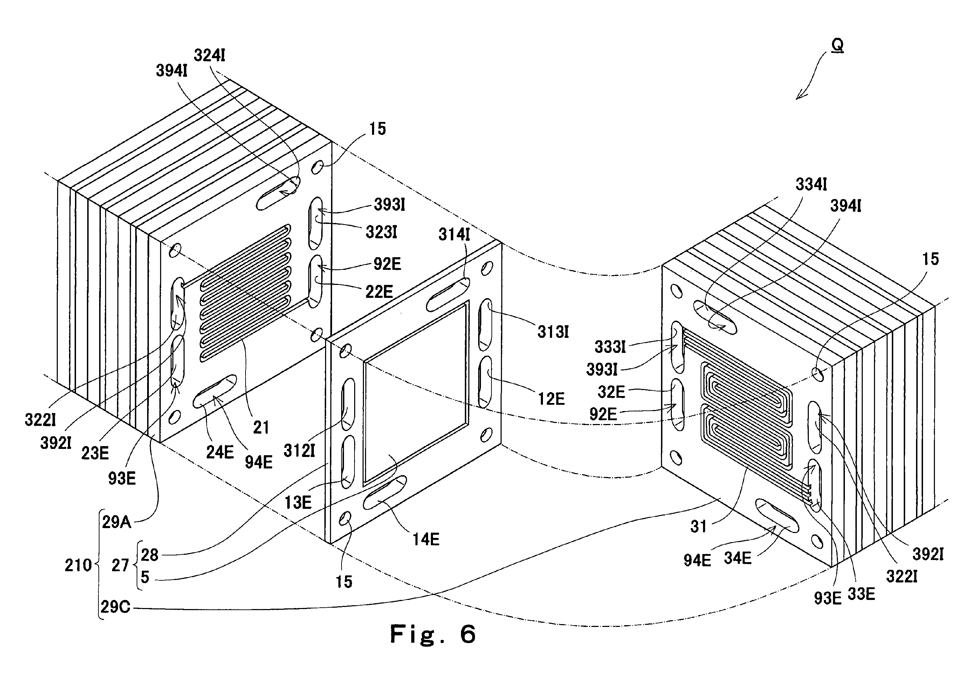

Fig. 6 is a partially exploded perspective view showing a stack structure of the second cells stacked in the second sub-stack of Fig. 1.

As shown in Fig. 6, the second cell 210 has a structure in which a second MEA component 27 is sandwiched between a pair of second anode separator 29A of a flat plate shape and second cathode separator 29C of a flat plate shape.

A second anode gas supply manifold hole 322I, a second cathode gas supply manifold hole 323I, a second heat transmission medium supply manifold hole 324I, an anode gas discharge manifold hole 22E, a cathode gas discharge manifold hole 23E, and a heat transmission medium discharge manifold hole 24E are formed to penetrate the peripheral portion of the second anode separator 29A in the direction in which the cells are stacked.

A second anode gas supply manifold hole 332I, a second cathode gas supply manifold hole 333I, a second heat transmission medium supply manifold hole 334I, an anode gas discharge manifold hole 32E, a cathode gas discharge manifold hole 33E, and a heat transmission medium discharge manifold hole 34E are formed to penetrate the peripheral portion of the second cathode separator 29C in the direction in which the cells are stacked.

A second anode gas supply manifold hole 312I, a second cathode gas supply manifold hole 313I, a second heat transmission medium supply manifold hole 314I, an anode gas discharge manifold hole 12E, a cathode gas discharge manifold hole 13E, and a heat transmission medium discharge manifold hole 14E are formed to penetrate the peripheral portion of the second MEA component 27 in the direction in which the cells are stacked.

In the second sub-stack Q, the second anode gas supply manifold holes 312I, 322I, and 332I are connected to each other to form the second anode gas supply manifold 392I.

In the second sub-stack Q, the second cathode gas supply manifold holes 313I, 3231, and 333I are connected to each other to form the second cathode gas supply manifold 393I.

In the second sub-stack Q, the second heat transmission medium supply manifold holes 314I, 324I, and 334I are connected to each other to form the second heat transmission medium supply manifold 394I.

On an inner surface of the second anode separator 29A, anode gas channel grooves (anode gas channels) 21 are formed to connect the second anode gas supply manifold hole 322I to the anode gas discharge manifold hole 22E. In the same manner, on an inner surface of the second cathode separator 29C, cathode gas channel grooves (cathode gas channels) 31 are formed to connect the second cathode gas supply manifold hole 333I to the cathode gas discharge manifold hole 33E. With such a structure, in an assembled state of the second cell 210, the anode gas in the second anode gas supply manifold 392I is supplied to the inside of the second cell 210 and the cathode gas in the second cathode gas supply manifold 393I is supplied to the inside of the second cell 210.

Subsequently, the stacked portion (heat transmission portion) between the second cells 210 in the second sub-stack Q will be described.

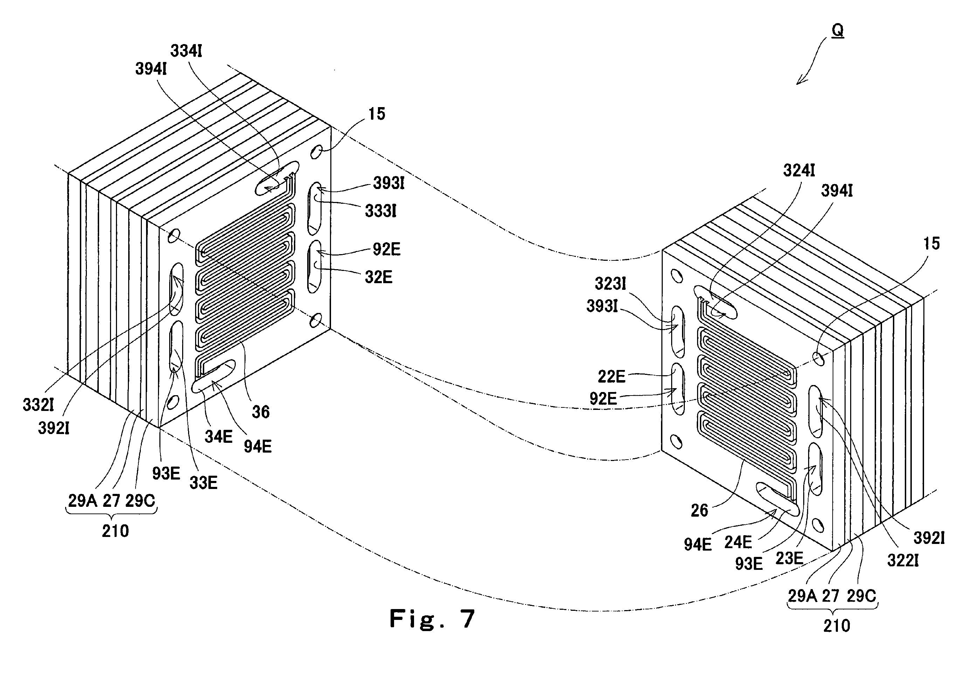

Fig. 7 is an exploded perspective view showing the stacked portion between the second cells in the second sub-stack of Fig. 6.

As shown in Fig. 7, on an outer surface of the second anode separator 29A, heat transmission medium channel grooves (heat transmission medium channels) 26 are formed to connect the second heat transmission medium supply manifold hole 324I to the heat transmission medium discharge manifold hole 24E. In the same manner, on an outer surface of the second cathode separator 29C, heat transmission medium channel grooves (heat transmission medium channels) 36 are formed to connect the second heat transmission medium supply manifold hole 334I to the heat transmission medium discharge manifold hole 34E. With such a structure, the heat transmission medium flows in the stacked portion without leakage to outside while carrying out heat exchange with the second cell 210 better.

Subsequently, the structure of the third cell 310 in the sub-stack R will be described.

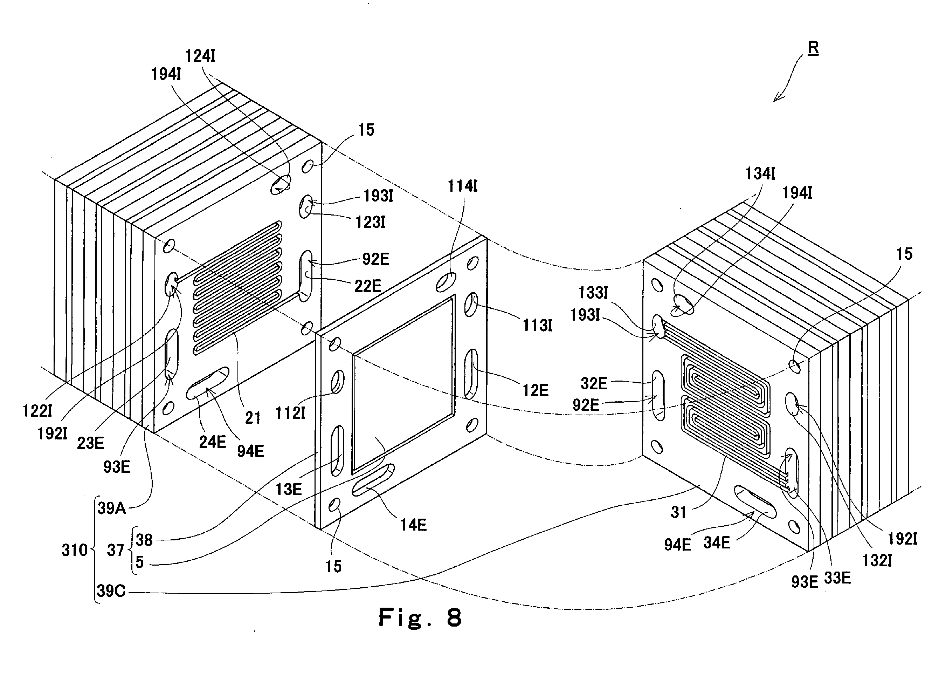

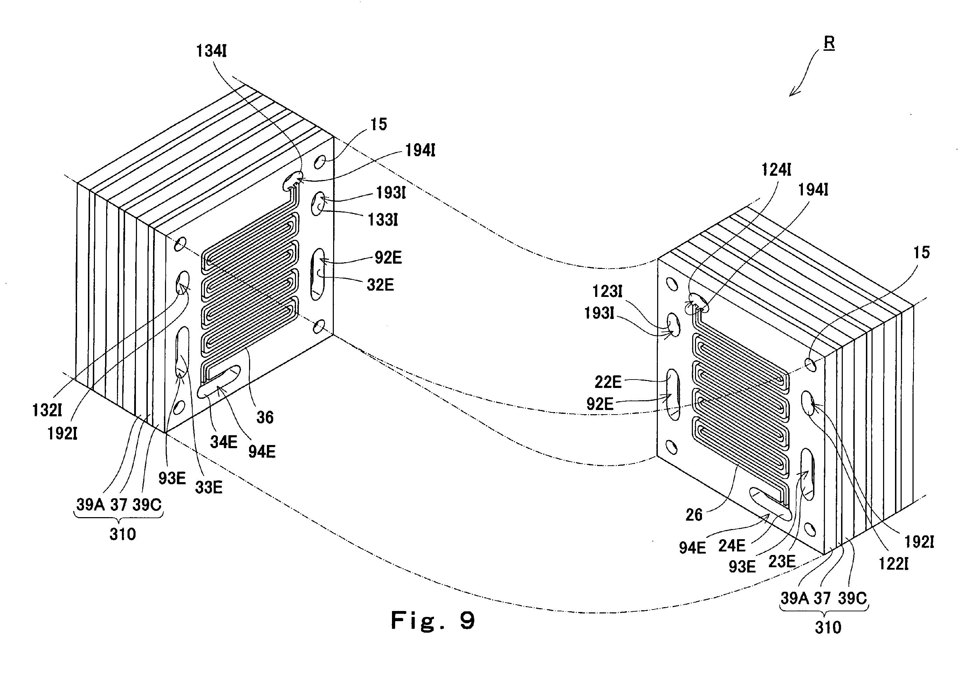

Fig. 8 is a partially exploded view showing the stack structure of the third cells stacked in the third sub-stack of Fig. 1. Fig. 9 is an exploded perspective view showing the stacked portion between the third cells in the third sub-stack of Fig. 8.

As shown in Figs. 8 and 9, the third cell 310 in the third sub-stack R is identical to the first cell 110 in the first sub-stack P except that the through-holes 212I, 213I, 214I, 222I, 223I, 3341, 232I, 233I, and 234I are not formed in the third cell 310.

The first anode gas supply manifold 192I, the first cathode gas supply manifold 193I, and the first heat transmission medium supply manifold 194I are formed in the third sub-stack R, as in the first sub-stack P, but the anode gas introduction passage 292I, the cathode gas introduction passage 293I, and the heat transmission medium introduction passage 294I are not formed thereon.

The third cell 310 has a structure in which a third MEA component 37 is sandwiched between a pair of third anode separator 39A of a flat plate shape and third cathode separator 39C of a flat plate shape.

In the assembled state of the third cell 310, the anode gas in the first anode gas supply manifold 192I is supplied to the inside of the third cell 310 and the cathode gas in the first cathode gas supply manifold 193I is supplied to the inside of the third cell 310.

Subsequently, the stacked portion (heat transmission portion) between the third cells 310 in the third sub-stack R will be described.

As shown in Fig. 9, on an outer surface of the third anode separator 39A, heat transmission medium channel grooves (heat transmission medium channels) 26 are formed to connect the first heat transmission medium supply manifold hole 124I to the heat transmission medium discharge manifold hole 24E. In the same manner, on an outer surface of the third cathode separator 39C, heat transmission medium channel grooves (heat transmission medium channels) 36 are formed to connect the first heat transmission medium supply manifold hole 134I to the heat transmission medium discharge manifold hole 34E. With such a structure, the heat transmission medium flows in the stacked portion without leakage to outside while carrying out heat exchange with the third cell 110 better.

In the above described structures of the first to third sub-stacks P, Q, and R, the first anode gas supply manifold 192I, the first cathode gas supply manifold 193I, and the first heat transmission medium supply manifold 194I are connected to the anode gas discharge manifold 92E, the cathode gas discharge manifold 93E, and the heat transmission medium discharge manifold 94E, respectively, by the anode gas channel grooves 21, the cathode gas channel grooves 31, and the heat transmission medium channel grooves 26 and 36 in the first sub-stack 110 and the third cell 310. In addition, the second anode gas supply manifold 392I, the second cathode gas supply manifold 393I, and the second heat transmission medium supply manifold 394I are connected to the anode gas discharge manifold 92E, the cathode gas discharge manifold 93E, and the heat transmission medium discharge manifold 94E, respectively, by the anode gas channel groove 21, the cathode gas channel grooves 31, and the heat transmission medium channel grooves 26 and 36 in the second cell 210.

Subsequently, the first intermediate current collector 52 disposed between the first sub-stack P and the second sub-stack Q will be described.

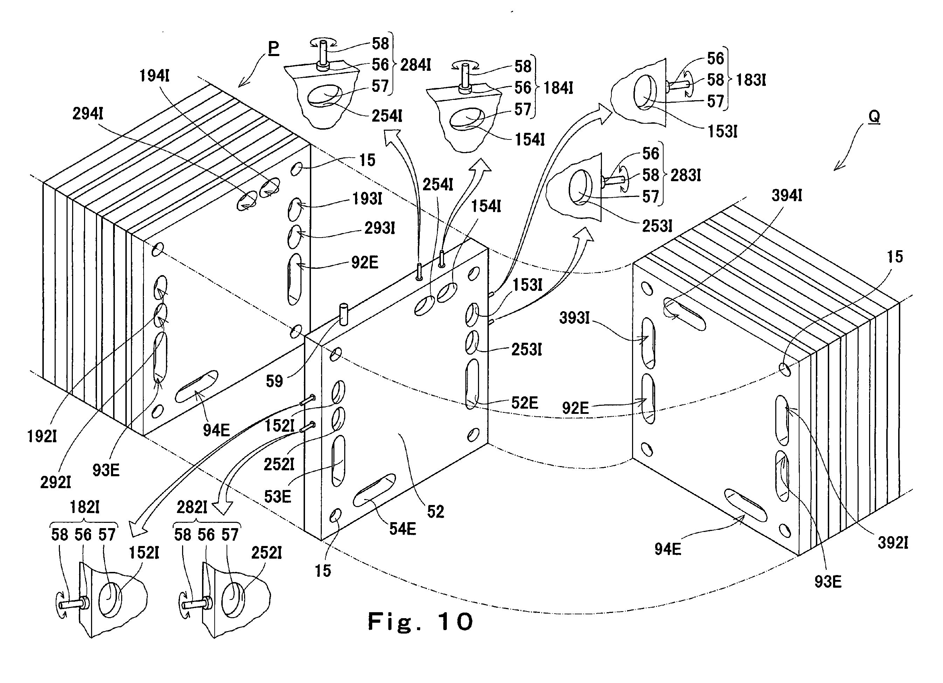

Fig. 10 is a perspective view schematically showing a structure of the first intermediate current collector of Fig. 1.

As shown in Fig. 10, as in the end portion current collectors 50 and 51, the first intermediate current collector 52 has a rectangular flat plate shape, is made of an electrically conductive material such as copper, and is provided with a terminal 59 on a side surface thereof.

Through holes 152I, 153I, 154I, 252I, 253I, and 254I are formed in the peripheral portion of the first intermediate current collector 52 so as to penetrate in the direction in which the cells are stacked.

The through-hole 152I is formed to connect the first anode gas supply manifold 192I in the first sub-stack P to the second anode gas supply manifold 392I in the second sub-stack Q.

The through-hole 252I is formed to connect the anode gas introduction passage 292I in the first sub-stack P to the second anode gas supply manifold 392I in the second sub-stack Q. In other words, the anode gas introduction passage 292I penetrates the peripheral portion of one of a pair of the end portion sub-stacks P and R in the direction in which the cells 110 or 310 are stacked and is connected to the second anode gas supply manifold 392I in the center portion sub-stack Q.

The through-hole 52E is formed to connect the anode gas discharge manifold 92E in the first sub-stack P to the anode gas supply manifold 92E in the second sub-stack Q.

The through-hole 153I is formed to connect the first cathode gas supply manifold 193I in the first sub-stack P to the second cathode gas supply manifold 393I in the second sub-stack Q.

The through-hole 253I is formed to connect the cathode gas introduction passage 293I in the first sub-stack P to the second cathode gas supply manifold 393I in the second sub-stack Q. In other words, the cathode gas introduction passage 293I penetrates the peripheral portion of one of the pair of end portion sub-stacks P and R in the direction in which the cells 110 or 310 are stacked and is connected to the second cathode gas supply manifold 393I in the center portion sub-stack Q.

The through-hole 53E is formed to connect the cathode gas discharge manifold 93E in the first sub-stack P to the cathode gas supply manifold 93E in the second sub-stack Q.

The through-hole 154I is formed to connect the first heat transmission medium supply manifold 194I in the first sub-stack P to the second heat transmission medium supply manifold 394I in the second sub-stack Q.

The through-hole 254I is formed to connect the heat transmission medium introduction passage 294I in the first sub-stack P to the second heat transmission medium supply manifold 394I in the second sub-stack Q. In other words, the heat transmission medium introduction passage 294I penetrates the peripheral portion of one of the pair of end portion sub-stacks P and R in the direction in which the cells 110 or 310 are stacked and is connected to the second heat transmission medium supply manifold 394I in the center portion sub-stack Q.

The through-hole 54E is formed to connect the heat transmission medium discharge manifold 94E in the first sub-stack P to the heat transmission medium discharge manifold 94E in the second sub-stack Q.

The anode gas supply on-off unit 182I, the cathode gas supply on-off unit 183I, the heat transmission medium supply on-off unit 184I, the anode gas introduction on-off unit 282I, the cathode gas introduction on-off unit 283I, and the heat transmission medium introduction on-off unit 284I are formed in the through-hole 152I, the through-hole 153I, the through-hole 154I, the through-hole 252I, the through-hole 253I, and the through-hole 254I, respectively.

The on-off units 182I, 183I, 184I, 282I, 283I, and 284I have the same structure.

To be specific, each of the on-off units 182I, 183I, 184I, 282I, 283I, and 284I includes a valve plug 57, a valve shaft 58, a bearing member 56, and a rotating device which is not shown.

The main surface of the valve plug 57 has substantially the same shape as a cross-section of each of the through-holes 152I, 153I, 154I, 252I, 253I, and 254I in the direction in which these holes extend. Therefore, each valve plug 57 closes an associated one of the through-holes 152I, 153I, 154I, 252I, 253I, and 254I.

Each valve shaft 58 is attached to the valve plug 57 so that the valve plug 57 is rotatable around the valve shaft 58 within an associated one of the through-holes 152I, 153I, 154I, 252I, 253I, and 254I. That is, the valve shaft 58 is coupled to the valve plug 57 so as to extend on a symmetric axis of the valve plug 57.

Each valve shaft 58 is attached to the valve plug 57 so as to air-tightly penetrate a side surface of the first intermediate current collector 52 to an associated one of the through-holes 152I, 153I, 154I, 252I, 253I, and 254I.

The bearing member 56 is provided between the valve shaft 58 and the first intermediate current collector 52. A known sealing unit (not shown), which includes a sealing member made of an elastic material such as rubber, is formed inside the bearing member 56.

The valve plug 57 and the valve shaft 58 are electrically insulated from the first intermediate current collector 52. To be specific, the valve plug 57 and the valve shaft 58 are made of a metal material coated with a heat resistant resin or an electrically insulating material represented by Teflon (registered mark). This makes it possible to prevent leakage of electricity from the first intermediate current collector 52 to the on-off units.

The rotating device is a known rotating device whose shaft member is rotatable to a predetermined angle. In the present embodiment, the rotating device is configured to include a step motor coupled to the valve shaft 58. Alternatively, the rotating device may be configured to include an arm member attached to a shaft end of the valve shaft 58, and an actuator attached to the arm member.

The anode gas supply on-off unit 182I is opened and closed to enable the first anode gas supply manifold 192I to be connected to and disconnected from the second anode gas supply manifold 392I in the second sub-stack Q.

The anode gas introduction on-off unit 282I is opened and closed to enable the anode gas introduction passage 292I to be connected to and disconnected from the second anode gas supply manifold 392I in the second sub-stack Q.

The cathode gas supply on-off unit 183I is opened and closed to enable the first cathode gas supply manifold 193I to be connected to and disconnected from the second anode gas supply manifold 3931 in the second sub-stack Q.

The cathode gas introduction on-off unit 283I is opened and closed to enable the cathode gas introduction passage 293I to be connected to and disconnected from the second cathode gas supply manifold 393I in the second sub-stack Q.

The heat transmission medium supply on-off unit 184I is opened and closed to enable the first heat transmission medium supply manifold 194I to be connected to and disconnected from the second heat transmission medium supply manifold 394I in the second sub-stack Q.

The heat transmission medium introduction on-off unit 284I is opened and closed to enable the heat transmission medium introduction passage 294I to be connected to and disconnected from the second heat transmission medium supply manifold 394I in the second sub-stack Q.

Subsequently, the second intermediate current collector 53 disposed between the second sub-stack Q and the third sub-stack R will be described.

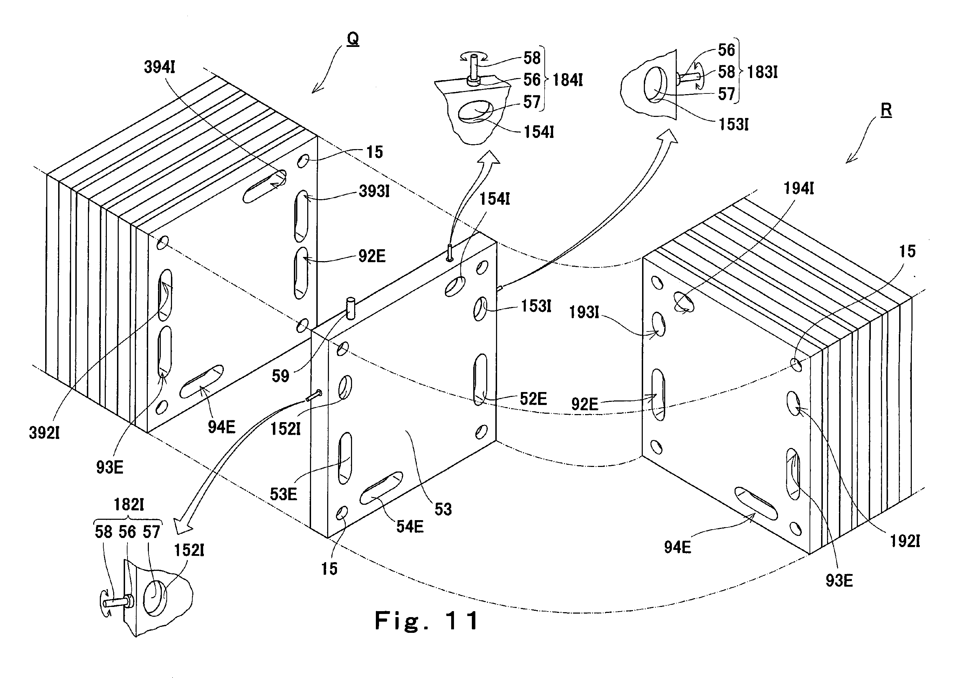

Fig. 11 is a perspective view schematically showing the structure of the second intermediate current collector of Fig. 1.

As shown in Fig. 11, the second intermediate current collector 53 has the same shape and structure as those of the first intermediate current collector 52. The second intermediate current collector 53 is different from the first intermediate current collector 52 except that the through-holes 252I, 253I, and 254I are not formed in the second intermediate current collector 53.

To be specific, the anode gas supply on-off unit 182I formed in the second intermediate current collector 53 is opened and closed to enable the second anode gas supply manifold 392I in the second sub-stack Q to be connected to and disconnected from the first anode gas supply manifold 192I in the third sub-stack R. The cathode gas supply on-off unit 183I formed in the second intermediate current collector 53 is opened and closed to enable the second cathode gas supply manifold 393I in the second sub-stack Q to be connected to and disconnected from the first cathode gas supply manifold 193I in the third sub-stack R. Furthermore, the heat transmission medium supply on-off unit 184I formed in the second intermediate current collector 53 is opened and closed to enable the second heat transmission medium supply manifold 394I in the second sub-stack Q to be connected to and disconnected from the first cathode gas supply manifold 194I in the third sub-stack R.

Subsequently, an example of a fuel cell system using the stack 100 will be described.

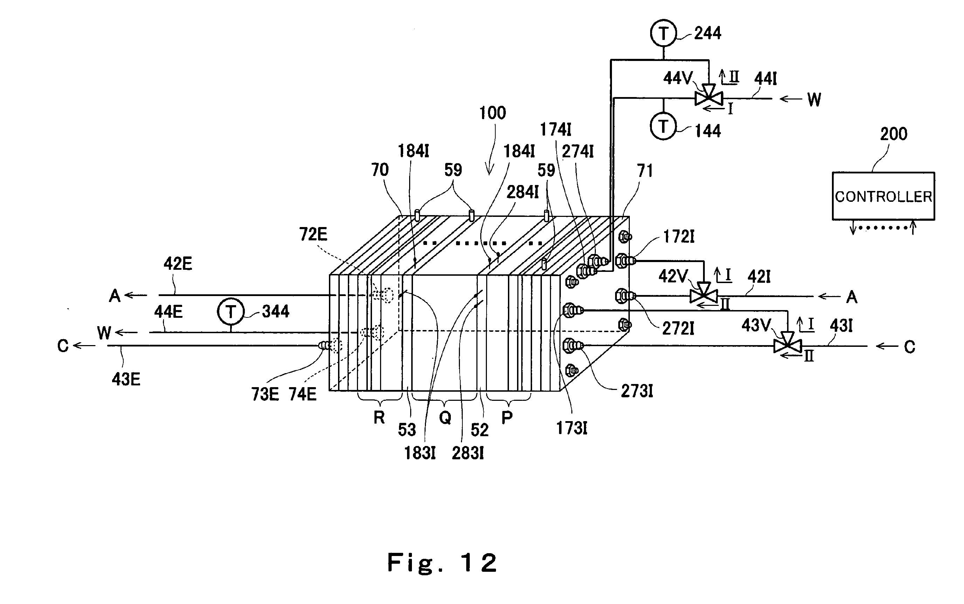

Fig. 12 is a view schematically showing a configuration of the fuel cell system using the stack of Fig. 1.

As shown in Fig. 12, an anode gas supply system 42I is connected to the first anode gas supply inlet 172I and to the second anode gas supply inlet 272I to be able to switch a supply destination of the anode gas between them. The anode gas supply system 42I is configured to include a switch 42V disposed at a juncture from which the path extends to the first anode gas supply inlet 172I and to the second anode gas supply inlet 272I. The switching operation of the switch 42V enables switching of the supply destination of the anode gas.

An anode gas supply system 43I is connected to the first cathode gas supply inlet 173I and to the second cathode gas supply inlet 273I to be able to switch a supply destination of the cathode gas between them. The cathode gas supply system 43I is configured to include a switch 43V disposed at a juncture from which the path extends to the first cathode gas supply inlet 173I and to the second cathode gas supply inlet 273I. The switching operation of the switch 43V enables switching of the supply destination of the cathode gas.

A heat transmission medium supply system 44I is connected to the first heat transmission medium supply inlet 174I and to the second heat transmission medium supply inlet 274I to be able to switch a supply destination of the heat transmission medium between them. The heat transmission medium supply system 44I is configured to include a switch 44V disposed at a juncture from which the path extends to the first heat transmission medium supply inlet 174I and to the second heat transmission medium supply inlet 274I. The switching operation of the switch 44V enables switching of the supply destination of the heat transmission medium.

The heat transmission medium supply system 44I is configured to be able to control a temperature of the heat transmission medium to be supplied. For example, the heat transmission medium supply system 44I is suitably a cooling water system including a hot water storage tank.

Three-way valves are used as the switches 42V, 43V, and 43V. Alternatively, the switches 42V, 43V, and 44V may be configured such that on-off valves are provided in the supply inlets 172I, 272I, 173I, 2731, 174I, and 274I, respectively.

A first temperature detector 144 for detecting the temperature of the heat transmission medium to be supplied to the first heat transmission medium supply inlet 174I and a second temperature detector 244 for detecting a temperature of the heat transmission medium to be supplied to the second heat transmission medium supply inlet 274I are disposed in the heat transmission medium supply system 44I.

An anode gas discharge system 42E is connected to an anode gas discharge outlet 72E. A cathode gas discharge system 43E is connected to a cathode gas discharge outlet 73E. A heat transmission medium discharge system 44E is connected to a heat transmission medium discharge outlet 74E. A third temperature detector 344 for detecting a temperature of the heat transmission medium to be discharged from the heat transmission medium discharge outlet 74E is disposed in the heat transmission medium discharge system 44E.

The first to third temperature detectors 144, 244, and 344 are respectively constituted by known temperature detectors such as thermocouple.

The anode gas supply system 42I, the cathode gas supply system 43I, and the heat transmission medium supply system 44I are each configured to include a supply device (not shown) such as a pipe and a pump. An anode gas A is suitably, for example, a hydrogen gas, or a reformed gas generated through a steam reforming reaction using hydrocarbon as a raw material. A cathode gas C is suitably, for example, oxygen gas or air. A heat transmission medium W is suitably, for example, water or silicon oil.

A controller 200 is configured to control the supply systems 42I, 43I, and 44I and the on-off units 182I, 282I, 183I, 283I, 184I, and 284I and to receive detection signals from the first to third temperature detectors 144, 244, and 344, to control the switches 42V, 43V, and 44V. The controller 200 is constituted by a calculating unit such as a microcomputer.

Subsequently, the example of an operation of the fuel cell system according to the first embodiment of the present invention configured as described above will be described. The operation described below is controlled by the controller 200.

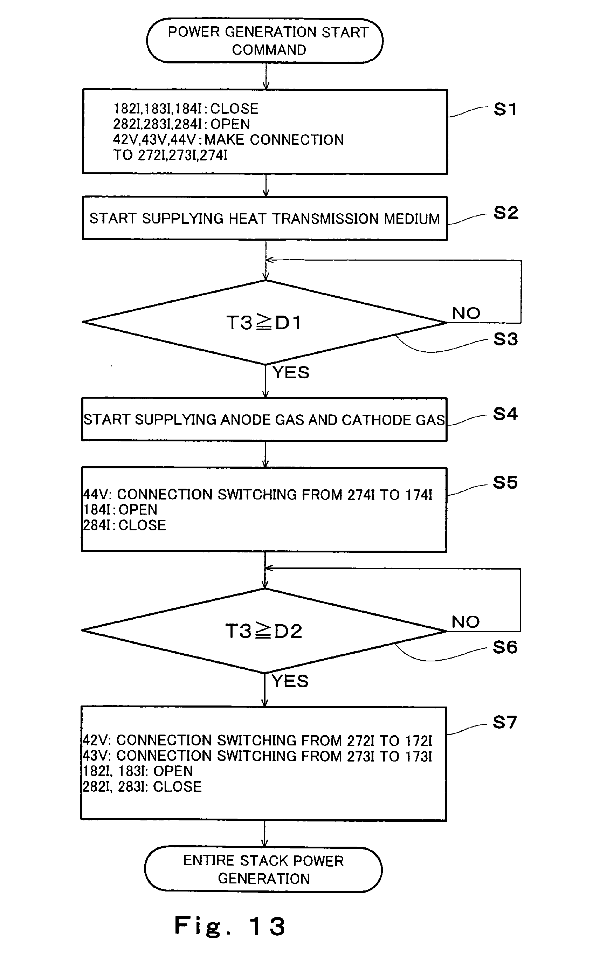

Fig. 13 is a flowchart showing the example of the operation of the fuel cell system of Fig. 12.

Initially, the controller 200 receives a power generation start command signal and executes control so that the anode gas, the cathode gas, and the heat transmission medium are supplied only to the second sub-stack Q.

To be specific, in step S1, the controller 200 closes the anode gas supply on-off units 182I, the cathode gas supply on-off units 183I and the heat transmission medium supply on-off units 184I in the first and second intermediate current collectors 52 and 53 and opens the anode gas introduction on-off unit 282I, the cathode gas introduction on-off unit 283I and the heat transmission medium introduction on-off unit 284I in the first intermediate current collector 52. In addition, the controller 200 switches the switches 42V, 43V, and 44V so that the anode gas is supplied to the second anode gas supply inlet 272I, the cathode gas is supplied the second cathode gas supply inlet 273I, and the heat transmission medium is supplied to the second heat transmission medium supply inlet 274I, respectively (switches to II side in Fig. 2)

Then, in step (center portion preheating step) S2, the controller 200 supplies the heat transmission medium in the heat transmission medium supply system 44I to the second heat transmission medium supply inlet 274I. At this time, the heat transmission medium supply system 44I supplies the heat transmission medium whose temperature is approximately equal to that of the stack 100 during the power generation operation. Thereby, the heat transmission medium flows in the second sub-stack (center portion sub-stack) Q to preheat the second sub-stack Q.

In step (first determination step) S3, the controller 200 obtains a discharge temperature T3 which is detected by the third temperature detector 344. The controller 200 compares a first determination temperature D1 pre-stored in the controller 200 to the discharge temperature T3. If it is determined that the discharge temperature T3 is the first determination temperature D1 or higher, the process advances to step S4. Thus, the controller 200 can determine whether or not preheating of the second sub-stack Q is completed.

In step (center portion power generation step) S4, the controller 200 supplies the anode gas in the anode gas supply system 42I and the cathode gas in the cathode gas supply system 43I to the second anode gas supply inlet 272I and to the second cathode gas supply inlet 273I, respectively. Thereby, a power generation output is obtained between the first intermediate current collector 52 and the second intermediate current collector 53. In such an operation method, only the second sub-stack Q is heated, and therefore, the second sub-stack Q is able to start power generation earlier.

In step (entire stack preheating step) S5, the controller 200 executes switching so that the heat transmission medium flows in the entire of the stack 100. To be specific, the controller 200 switches the switch 44V in the heat transmission medium supply system 44I so that the heat transmission medium is supplied to the first heat transmission medium supply inlet 174I (switches to I side in Fig. 12). The controller 200 opens the heat transmission medium supply on-off units 184I in the first and second intermediate current collectors 52 and 53. Thereby, the heat transmission medium flows in the first to third sub-stacks P, Q, and R to preheat the first and third sub-stacks P and R. In such an operation method, the first and third sub-stacks P and R can be preheated while continuing the power generation in the second subs-stack Q. Therefore, transition to the entire stack power generation smoothly take places.

In step S5, the controller 200 closes the heat transmission medium introduction on-off unit 284I in the first intermediate current collector 52. Thereby, the heat transmission medium introduction passage 294I can be separated from the second heat transmission medium supply manifold 394I.

In step (second determination step) S6, the controller 200 obtains a discharge temperature T3 which is detected by the third temperature detector 344. The controller 200 compares a second determination temperature D2 pre-stored in the controller 200 to the discharge temperature T3. If it is determined that the discharge temperature T3 is equal to the second determination temperature D2 or higher, the process advances to step S7. Thus, the controller 200 can determine whether or not the first sub-stack P and the third sub-stack R have been preheated sufficiently.

In step (entire stack power generation step) S7, the controller 200 switches the switch 42V in the anode gas supply system 421 so that the anode gas is supplied to the first anode gas supply inlet 172I and switches the switch 43V in the cathode gas supply system 43I so that the cathode gas is supplied to the first cathode gas supply inlet 173I (switches to I side in Fig. 12). In addition, the controller 200 opens the anode gas supply on-off units 182I and the cathode gas supply on-off units 183I in the first and second intermediate current collectors 52 and 53. Thereby, the anode gas and the cathode gas flow in the first to third sub-stacks P, Q, and R within the stack 100. Furthermore, the controller 200 switches a power generation end of the fuel cell system from between the first and second intermediate current collectors 52 and 53 to between the end portion current collectors 50 and 51. Thus, the power generation (entire stack power generation) in the first to third sub-stacks P, Q, and R in the stack 100 is started.

In step S7, the controller 200 closes the anode gas introduction on-off unit 282I and the cathode gas introduction on-off unit 283I in the first intermediate current collector 52. Thereby, the anode gas introduction passage 292I and the cathode gas introduction passage 293I can be separated from the channel of the second anode gas supply manifold 392I and the channel of the second cathode gas supply manifold 393I, respectively.

Subsequently, an example of the operation for switching from the entire stack power generation operation to the center portion power generation operation of the power generation output in the fuel cell system configured as described above will be described. The switching operation described below is controlled by the controller 200.

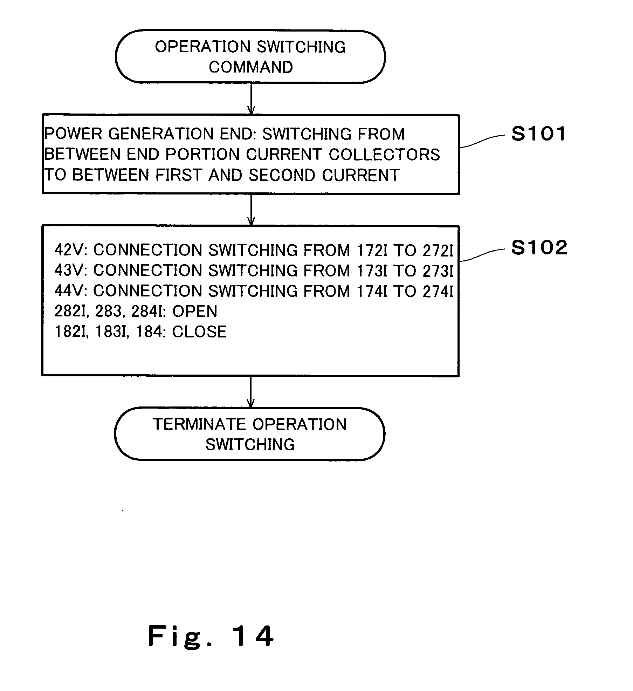

Fig. 14 is a flowchart showing the example of the operation for switching from the entire stack power generation operation to the center portion power generation operation in the fuel cell system of Fig. 12.

Initially, the controller 200 receives an operation switching command signal in the entire stack power generation operation (step S7 in Fig. 13) and advances the process to step S101.

In step S101, the controller 200 switches a power generation end in the fuel cell system from between the end portion current collectors 50 and 51 to between the first and second intermediate current collectors 52 and 53. Thereby, the power generation (center portion power generation) in the second sub-stack Q in the stack 100 is started. However, at this time, the anode gas, the cathode gas and the heat transmission medium are unnecessarily supplied to the first sub-stack P and the third sub-stack R, and therefore, the operation efficiency must be improved. In addition, since the electric potential in the first cells 110 and the electric potential in the third cells 310 continue to rise, performance of the MEA 5 in the first MEA component 17 and the MEA 5 in the third MEA component 37 may be degraded.

Accordingly, in step (center portion power generation step) S102, the controller 200 switches the switch 42V in the anode gas supply system 42I so that the anode gas is supplied to the second anode gas supply inlet 272I, switches the switch 43V in the cathode gas supply system 43I so that the cathode gas is supplied to the second cathode gas supply inlet 273I, and switches the switch 44V in the heat transmission medium supply system 44I so that the heat transmission medium is supplied to the second heat transmission medium supply inlet 274I (switching to II side in Fig. 12). In addition, the controller 200 opens the anode gas introduction on-off unit 282I, the cathode gas introduction on-off unit 283I, and the heat transmission medium introduction on-off unit 2841 in the first intermediate current collector 52, and closes the anode gas supply on-off units 182I, the cathode gas supply on-off units 183I, and the heat transmission medium supply on-off units 184I in the first and second intermediate current collectors 52 and 53. Thereby, the anode gas, the cathode gas, and the heat transmission medium flows only in the second sub-stack Q within the stack 100.

In such an operation method, the power generation output of the second sub-stack Q is not substantially reduced. Therefore, the power generation can continue stably without unstabilized power generation output due to a reduced power generation output.

The controller 200 may include a timer to obtain preheating times for which the heat transmission medium is flowed for the first and second determination steps S3 and S6. In this case, the first determination step S3 and the second determination step S6 may be carried out in such a manner that the preheating times are compared to the determination times pre-stored in the controller 200.

As the first determination temperature D1 and the second determination temperature D2 or the determination time, appropriate determination temperatures or appropriate determination time may be suitably obtained based on an operation experience conducted in advance using the stack 100.

### (Embodiment 2)

The second embodiment of the present invention is different from the first embodiment only in the first determination step. Therefore, only the first determination step will be described. Since the stack, the fuel cell system using the stack, and the operation method of the fuel cell system except for the first determination step are identical to those of the first embodiment, description therefor will be omitted.

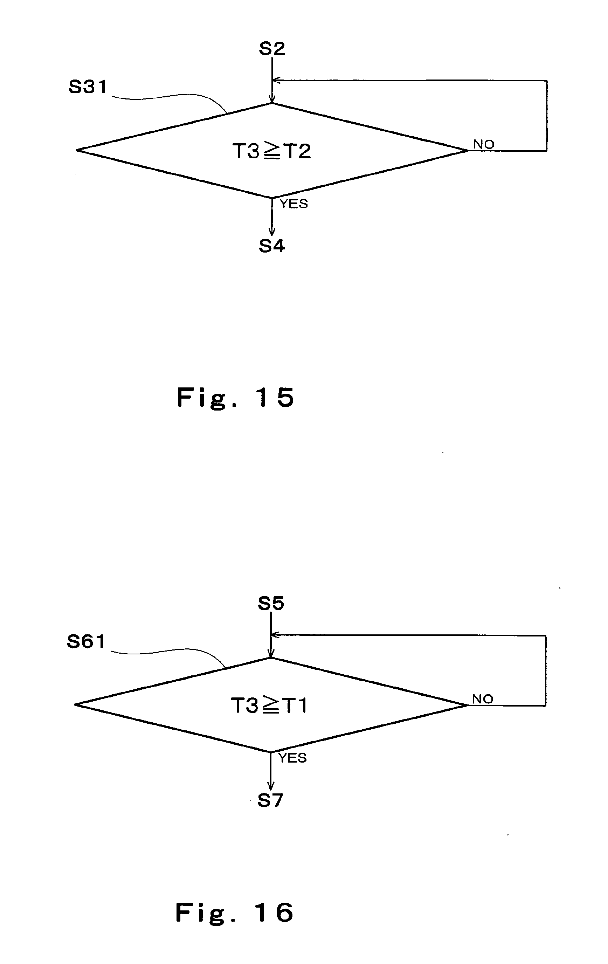

Fig. 15 is a flowchart showing the first determination step in the second embodiment of the present invention.

As shown in Fig. 15, in the second embodiment, the first determination temperature D1 is not a numeric value pre-stored in the controller 200 but is a supply temperature T2 detected by the second temperature detector 244.

To be specific, after step S2, in step (first determination step) S31, the controller 200 obtains the supply temperature T2 detected by the second temperature detector 244 and the discharge temperature T3 detected by the third temperature detector 344. The controller 200 compares these temperatures and advances the process to step S4 if the discharge temperature T3 is equal to the supply temperature T2. Since a heat source is not provided in the second sub-stack Q, the determination can be made based on, to be precise, whether or not the discharge temperature T3 is substantially equal to the supply temperature T2, for example, the discharge temperature T3 has reached a temperature within a temperature difference which is less than 1°C with respect to the supply temperature T2.

### (Embodiment 3)

The third embodiment of the present invention is different from the first embodiment only in the second determination step. Therefore, only the second determination step will be described. Since the stack, the fuel cell system using the stack, and the operation method of the fuel cell system except for the second determination step are identical to those of the first embodiment, description therefor will be omitted.

Fig. 16 is a flowchart showing the second determination step in the third embodiment of the present invention.

As shown in Fig. 16, in the third embodiment, the second determination temperature D2 is not a numeric value pre-stored in the controller 200 but is a supply temperature T1 detected by the first temperature detector 144.

To be specific, after step S5, in step (first determination step) S61, the controller 200 obtains the supply temperature T1 detected by the first temperature detector 144 and the discharge temperature T3 detected by the third temperature detector 344. The controller 200 compares these temperatures and advances the process to step S7 if the discharge temperature T3 is equal to or higher than the supply temperature T1.

### (Embodiment 4)

A fourth embodiment of the present invention is different from the first embodiment only in the structure of the stack. Therefore, a different portion of the structure of the stack, a different portion of the fuel cell system using the different portion of the structure of the stack, and a different portion of the operation method of the fuel cell system will be described. Since the other portions in the structure of the stack, in the fuel cell system using the structure of the stack, and in the operation method of the fuel cell system are identical to those of the first embodiment, they will not be further described.

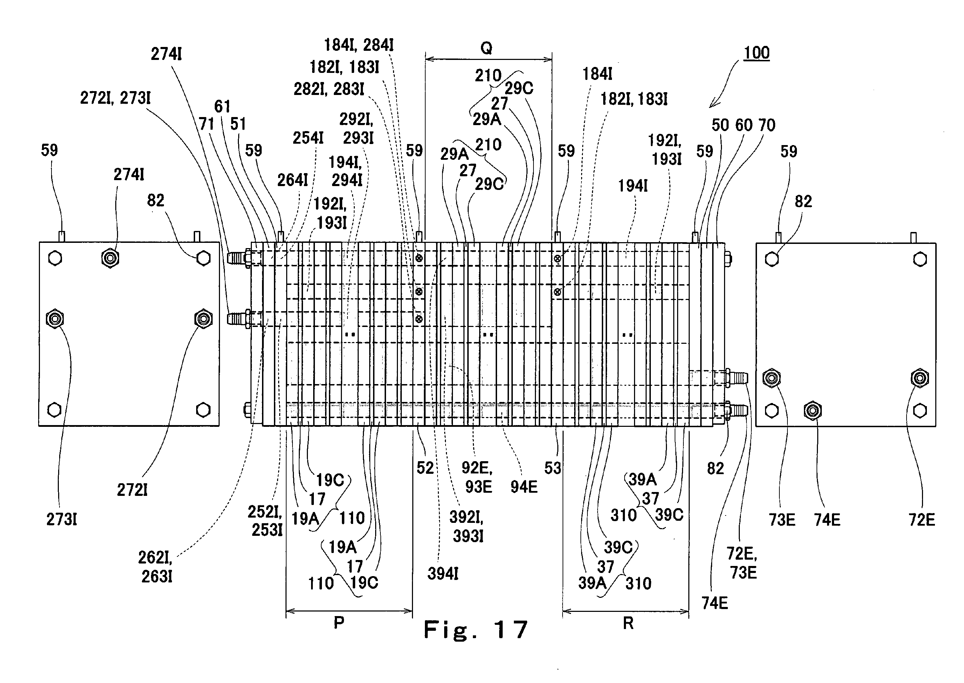

Fig. 17 is a view showing the stack structure of the fuel cell stack according to the fourth embodiment of the present invention, as viewed from three directions.

As shown in Fig. 17, in the fourth embodiment, the first anode gas supply inlet 172I, the first cathode gas supply inlet 173I, and the first heat transmission medium supply inlet 174I are not formed in the first sub-stack P. In addition, the anode gas introduction on-off unit 282I, the cathode gas introduction on-off unit 283I, and the heat transmission medium introduction on-off unit 284I are omitted. This makes the configuration of the stack 100 simplified.

The fuel cell system shown in Fig. 12 may be altered as described below.

The anode gas supply system 42I, the cathode gas supply system 43I, and the heat transmission medium supply system 44I are connected to the second anode gas supply inlet 272I, the second cathode gas supply inlet 273I, and the second heat transmission medium supply inlet 274I, respectively. The switches 42V, 43V, and 44V are omitted.

Thus, the stack 100 of the present embodiment makes anode gas supply inlet 272I, the cathode gas supply inlet 2731, and the heat transmission medium supply inlet 274I single in number, the stack 100 can be connected to the anode gas supply system, the cathode gas supply system, and the heat transmission medium supply system in the conventional fuel cell system. In other words, the stack 100 can be used in place of the conventional stack. Therefore, it is not necessary to alter the fuel cell system, and the installation conditions of the stack can be easily met.

The operation of the fuel cell system of the present invention shown in Fig. 13 is altered as described below.

In the entire stack preheating step S5, the anode gas, the cathode gas and the heat transmission medium continue to be supplied to the second anode gas supply inlet 272I, the second cathode gas supply inlet 273I, and the second heat transmission medium supply inlet 274I, respectively, following the center portion power generation step S4. The heat transmission medium supply on-off units 184I in the first and second intermediate current collectors 52 and 53 are opened. Thereby, the heat transmission medium is also supplied to the first heat transmission medium supply manifolds 194I in the first sub-stack P and in the third sub-stack Q via the transmission medium introduction passage 294I and the second heat transmission medium supply manifold 394I.

In the entire stack power generation step S7, the anode gas, the cathode gas and the heat transmission medium continue to be supplied to the second anode gas supply inlet 272I, the second cathode gas supply inlet 273I, and the second heat transmission medium supply inlet 274I, respectively, following the second determination step S6. The anode gas supply on-off units 182I and the cathode gas supply on-off units 183I in the first and second intermediate current collectors 52 and 53 are opened. Thereby, the anode gas is supplied to the first anode gas supply manifolds 192I in the first sub-stack P and the third sub-stack Q via the anode gas introduction passage 292I and the second anode gas supply manifold 392I, while the cathode gas is supplied to the first cathode gas supply manifolds 193I in the first sub-stack P and the third sub-stack Q via the cathode gas introduction passage 293I and the second cathode gas supply manifold 393I.

Therefore, the fourth embodiment can make the operation method of the fuel cell system of the present invention more simplified.

### (Embodiment 5)

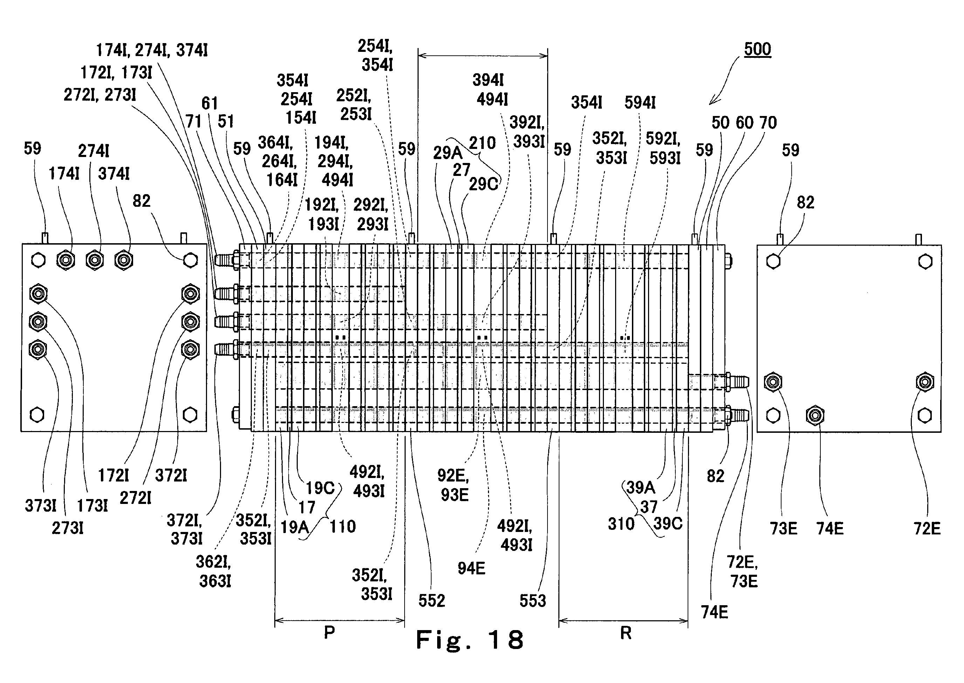

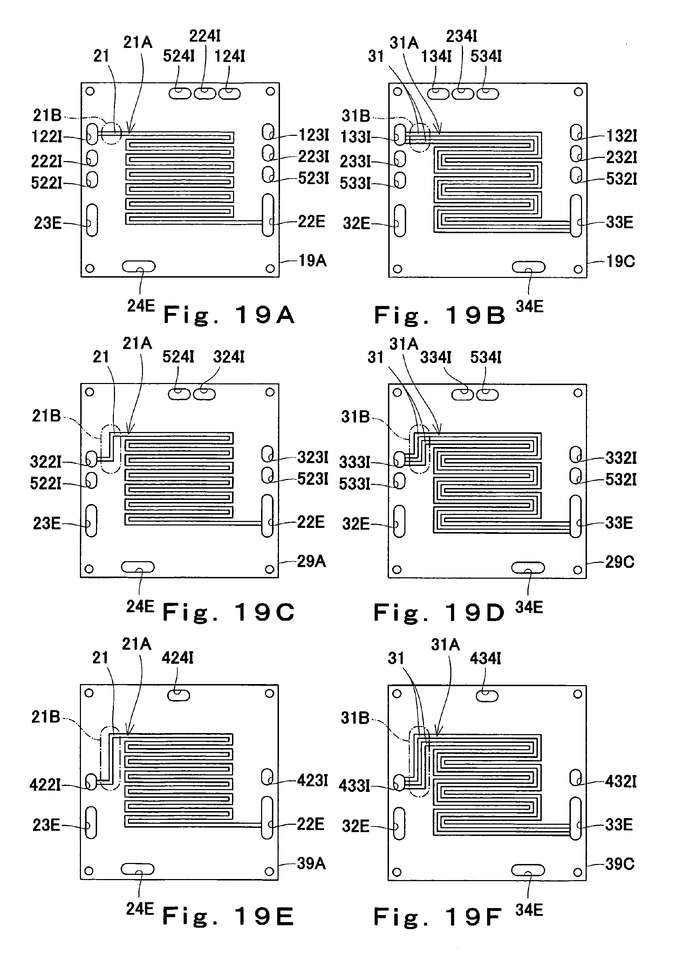

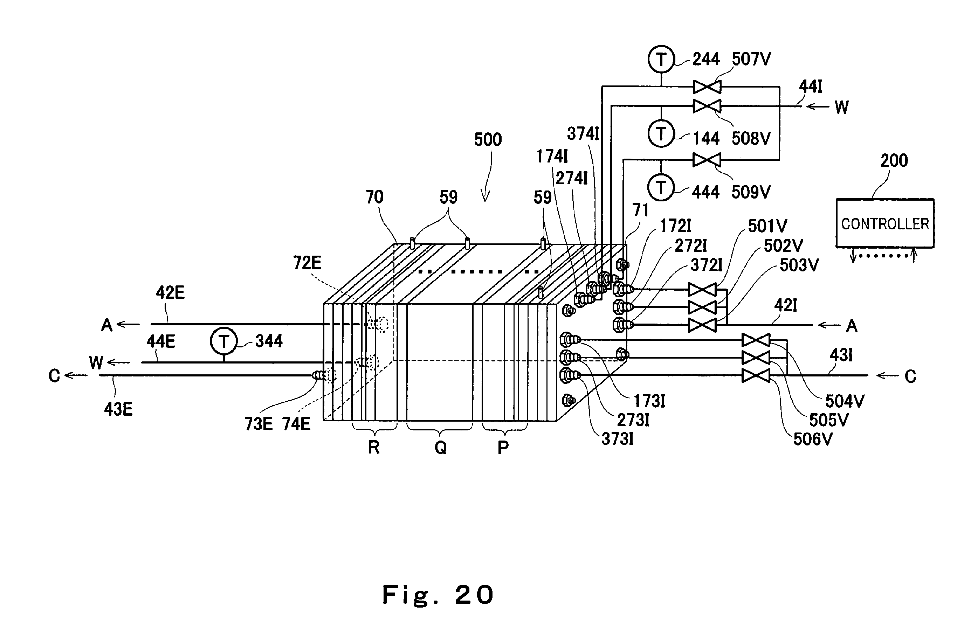

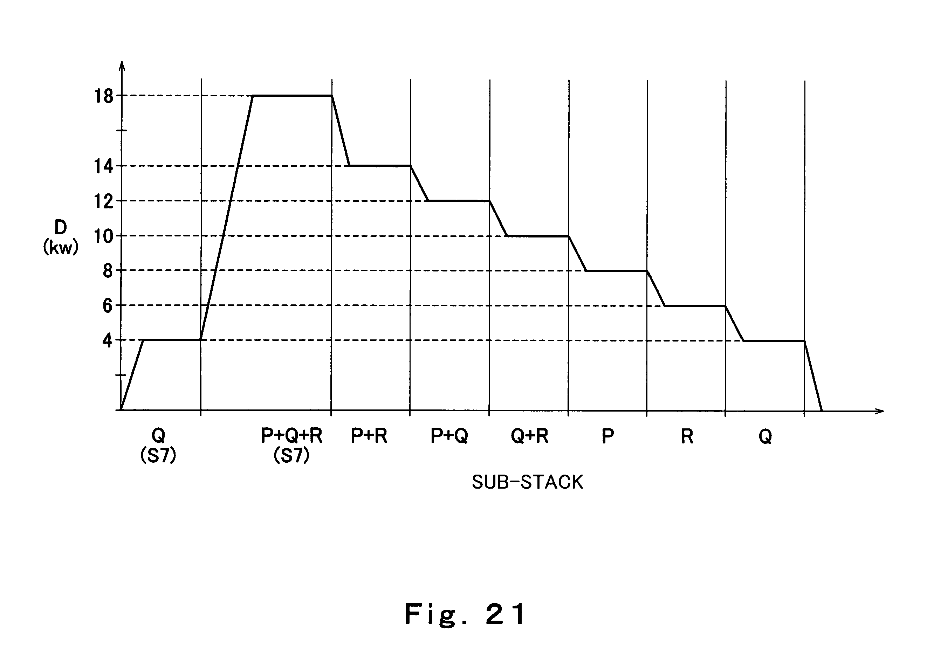

Fig. 18 is a view showing a stack structure of a fuel cell stack according to a fifth embodiment of the present invention, as viewed from three directions. Fig. 19 is a plan view schematically showing inner surfaces of an anode separator and a cathode separator of Fig. 18. Fig. 20 is a view schematically showing a configuration of a fuel cell system using the stack of Fig. 18. Fig. 21 is an output view schematically showing an output variation pattern of the fuel cell system of Fig. 20.

In Figs. 18 to 21, the same reference numerals are used to identify the same or corresponding components or members in Figs. 1 through 12, which will not be further described. A difference between them will be described. In Fig. 18, a part of the same reference numerals as those in Fig. 1 are omitted.

In a stack 500 according to the fifth embodiment of the present invention, the anode gas supply on-off units 182I, the cathode gas supply on-off units 183I, the heat transmission medium supply on-off units 184I, the anode gas introduction on-off unit 282I, the cathode gas introduction on-off unit 283I, and the heat transmission medium introduction on-off unit 284I in the first intermediate current collector 552 and the second intermediate current collector 553 are omitted, and switching of the supply destination among the first sub-stack P, the second sub-stack Q, and the third sub-stack R is selectively performed in the anode gas supply system 42I, the cathode gas supply system 43I, and the heat transmission medium supply system 44I.

Therefore, a different portion of the structure of the stack, and a different portion of the fuel cell system using the different portion of the structure of the stack, will be described, and the structure of the stack and the operation method of the fuel cell system using the structure of the stack are identical to those of the above described embodiments and will not be further described.

As shown in Fig. 18, the first intermediate current collector 552 and the second intermediate current collector 553 divide the first to third anode gas supply manifolds 192I, 392I, and 592I, the first to third cathode gas supply manifolds 193I, 393I, and 593I, and the first to third heat transmission medium supply manifolds 194I, 394I, and 594I. To be specific, the anode gas supply on-off units 182I, the cathode gas supply on-off units 183I, and the heat transmission medium supply on-off units 184I are omitted from the first intermediate current collector 552 and the second intermediate current collector 553. The through-holes 252I, 253I, and 254I are formed in the anode gas introduction on-off unit 282I, the cathode gas introduction on-off unit 283I, and the heat transmission medium introduction on-off unit 284I, respectively.

In the third sub-stack R, the third anode gas supply manifold 592I, the third cathode gas supply manifold 593I, and the third heat transmission medium supply manifold 594I are formed.

The third anode gas supply manifold 592I is connected to the third anode gas supply inlet 372I through the though holes 352I in the first and second intermediate current collectors 552 and 553, the second anode gas introduction passage 492I penetrating the peripheral portions of the first sub-stack P and the second sub-stack Q in the direction in which the cells are stacked, the through-hole 352I in the end portion current collector 51, and the through-hole 362I in the insulating plate 61.

In the same manner, the third cathode gas supply manifold 593I is connected to the third cathode gas supply inlet 373I through the though holes 353I in the first and second intermediate current collectors 552 and 553, the second cathode gas introduction passage 493I penetrating the peripheral portions of the first sub-stack P and the second sub-stack Q in the direction in which the cells are stacked, the through-hole 353I in the end portion current collector 51, and the through-hole 363I in the insulating plate 61.

In the same manner, the third heat transmission medium supply manifold 594I is connected to the third heat transmission medium supply inlet 374I through the though holes 354I in the first and second intermediate current collectors 552 and 553, the second heat transmission medium introduction passage 494I penetrating the peripheral portions of the first sub-stack P and the second sub-stack Q in the direction in which the cells are stacked, the through-hole 354I in the end portion current collector 51, and the through-hole 364I in the insulating plate 61.

Subsequently, the structure of inner surfaces of the first to third anode separators 19A, 29A, and 39A, and inner surfaces of the first to third cathode separators 19C, 29C, and 39C will be described with reference to Fig. 19. The heat transmission medium channel structures 26 and 36 on the outer surfaces of the first to third anode separators 19A, 29A, and 39A and on the outer surfaces of the first to third cathode separators 19C, 29C, and 39C have channels extending from the first heat transmission medium manifold holes 124I and 134I, from the second heat transmission medium manifold holes 324I and 334I, and the third heat transmission medium manifold holes 424I and 434I, as in the channel structures formed on the inner surfaces thereof, although these are not shown.

As shown in Fig. 19(a)and 19(b), a through-hole 522I forming the second anode gas introduction passage 492I is formed on the first anode separator 19A such that the through-hole 522I and the through-hole 222I are arranged side by side, and a through-hole 532I forming the second anode gas introduction passage 492I is formed on the first cathode separator 19C such that the through-hole 532I and the through-hole 232I are arranged side by side. In addition, a through-hole 523I forming the second cathode gas introduction passage 493I is formed on the first anode separator 19A such that the through-hole 5231 and the through-hole 223I are arranged side by side, while a through-hole 533I forming the second cathode gas introduction passage 493I is formed on the first cathode separator 19C such that the through-hole 533I and the through-hole 233I are arranged side by side. Furthermore, a through-hole 524I forming the second heat transmission medium introduction passage 494I is formed on the first anode separator 19A such that the through-hole 524I and the through-hole 224I are arranged side by side, and a through-hole 534I forming the second heat transmission medium introduction passage 494I is formed on the first cathode separator 19C such that the through-hole 534I and the through-hole 234I are arranged side by side.

As shown in Fig. 19(c), the through-holes 522I, 523I, and 524I are formed on the second anode separator 29A as in the first anode separator 19A.

As shown in Fig. 19(d), the through-holes 532I, 5331, and 534I are formed on the second cathode separator 29C as in the first cathode separator 19C.

As shown in Fig. 19(e), a third anode gas supply manifold hole 4221 forming the third anode gas supply manifold 592I, a third cathode gas supply manifold hole 423I forming the third cathode gas supply manifold 593I, and a third transmission medium supply manifold hole 424I forming the third heat transmission medium supply manifold 594I are formed on the third anode separator 39A. The anode gas channel groove 21 is configured to extend from the third anode gas supply manifold hole 422I.

As shown in Fig. 19(f), a third anode gas supply manifold hole 432I forming the third anode gas supply manifold 592I, a third cathode gas supply manifold hole 433I forming the third cathode gas supply manifold 593I, and a heat third transmission medium supply manifold hole 434I forming the third heat transmission medium supply manifold 594I are formed on the third cathode separator 39C. The cathode gas channel grooves 31 are configured to extend from the third cathode gas supply manifold hole 433I.

In such a configuration, the stack 500 is able to achieve the advantages of the stack 100 of the first embodiment, although it omits the anode gas supply on-off unit 182I, the cathode gas supply on-off unit 183I, and the heat transmission medium supply on-off unit 184I, and the anode gas introduction on-off unit 282I, the cathode gas introduction on-off unit 283I, and the heat transmission medium supply on-off unit 284I.

In addition, the stack 500 has a structure for enabling the anode gas, the cathode gas, and the heat transmission medium to be flowed independently in the first sub-stack P, the second sub-stack Q, and the third sub-stack R.

By configuring the setting so that the number of the first cells 110 in the first sub-stack P, the number of the second cells 210 in the second sub-stack Q, and the number of third cells 310 in the third sub-stack R are different in number, more power generation output levels can be achieved with sub-stacks which are fewer in number while suppressing degradation of the MEA in the stack 500. In the present embodiment, the number of the first cells 110 in the first sub-stack P is 40, the number of the second cells 210 in the second sub-stack Q is 20, and the number of the third cells 310 in the third sub-stack R is 30.

Subsequently, the fuel cell system using the stack 500 will be described with reference to Fig. 20.

The anode gas supply system 42I is connected to the third anode gas supply inlet 372I. Valves 501V, 502V, and 503V are provided in the anode gas supply system 42I so that the anode gas is selectively supplied to the first to third anode gas supply inlets 172I, 272I, and 373I. By on-off controlling the valves 501V, 502V, and 503V, the supply destination of the anode gas is selectively switched.

In the same manner, the cathode gas supply system 43I is connected to the third cathode gas supply inlet 373I. Valves 504V, 505V, and 506V are provided in the cathode gas supply system 43I so that the cathode gas is selectively supplied to the first to third cathode gas supply inlets 173I, 273I, and 373I. By on-off controlling the valves 504V, 505V, and 506V, the supply destination of the cathode gas is selectively switched.

The heat transmission medium supply system 44I is connected to the third heat transmission medium supply inlet 374I. Valves 507V, 508V, and 509V are provided in the heat transmission medium supply system 44I so that the heat transmission medium is selectively supplied to the first to third heat transmission medium supply inlets 174I, 274I, and 374I. By on-off controlling the valves 507V, 508V, and 509V, the supply destination of the heat transmission medium is selectively switched.

A fourth temperature detector 444 is additionally provided in the heat transmission medium supply system 44I to detect the temperature of the heat transmission medium to be supplied to the third heat transmission medium supply inlet 374I, as compared to the fuel cell system of Fig. 12.

Subsequently, an output variation pattern in the fuel cell system of Fig. 20 will be schematically described with reference to Fig. 21.

The controller 200 controls the valves 501V to 506V in the anode gas supply system 42I and the cathode gas supply system 43I, thereby obtaining a power generation output D of 4KW in the center portion power generation step S4 (see Fig. 13) after receiving the power generation start command. In the entire stack power generation step S7 (see Fig. 13), the power generation output D of 18KW is obtained.

During the power generation operation in the fuel cell system, the controller 200 selects one or more of sub-stacks P, Q, and R so that the power generation output D is closest to an electric power load based on a magnitude of the external electric power load, and controls the anode gas supply system 42I and the cathode gas supply system 43I so that the supply destination of the anode gas and the supply destination of the cathode gas are switched.

Thereby, the power generation output D in the fuel cell system is controlled to be suitable for the external electric power load. Therefore, the power generation output D can be controlled more maneuverably and economically while suppressing degradation of the MEA in the stack 500. To be specific, the controller 200 controls the valves 501V to 506V in the anode gas supply system 42I and in the cathode gas supply system 43I so that the power generation output D of the stack 500 is adjusted in step manner. To be specific, the power generation output D of the stack 500 is adjusted in seven stages in such a manner that the output D is 14KW during the power generation state in the first sub-stack P and the third sub-stack R, the output D is 12KW during the power generation state in the first sub-stack P and the second sub-stack Q, the output D is 10KW during the power generation state in the second sub-stack Q and the third sub-stack R, the output D is 8KW during the power generation state only in the first sub-stack P, the output D is 6KW during the power generation state only in the third sub-stack R, and the output D is 4KW during the power generation state only in the second sub-stack Q.

In the case where the stack 100 of the first embodiment or the fourth embodiment is used as the stack, the supply destination of the anode gas and the supply destination of the cathode gas to the sub-stacks P, Q, and R can be switched by controlling at least any one of the anode gas supply on-off unit 182I, the cathode gas supply on-off unit 183I, the anode gas introduction on-off unit 282I and the cathode gas introduction on-off unit 283I in the stack 100. Nonetheless, selection range for selecting one or more of the sub-stacks P, Q, and R is limited as compared to the stack 500.

Since the power generation output D of the stacks 100 to 500 responds by switching of the supply destination of the anode gas and the supply destination of the cathode gas to the sub-stacks P, Q, an R, there is a room for improvement in responsiveness of the power generation output D in the stacks 100 and 500. Accordingly, the fuel cell system may be configured in such a manner that a rechargeable battery or the like is mounted between the external electric power load and the stack 100 or 500 so as to compensate for responsiveness of the power generation output D of the stack 100 or 500 to the electric power load.

It is desired that the first to third anode gas supply manifolds 192I, 392I, and 592I in the fuel cell system of the present invention which is illustrated in the fifth embodiment be arranged adjacent each other as viewed from the direction in which the cells are stacked in the stack 500.

Hereinafter, the phrase "it is desired that the first to third anode gas supply manifolds be arranged adjacent each other" will be described.

The anode gas flows from the first to third anode gas supply manifolds 192I, 392I, and 592I to the anode gas channel grooves 21 formed on the first to third anode separators 19A, 29A, and 39A. Portions of the anode gas passage grooves 21 where the anode gas first reaches the anode-side catalyst layer 2A and the anode-side gas diffusion layer 4A of the MEA 5 are referred to as anode gas reaching portions 21A.

Portions of the anode gas channel grooves 21, extending from the first to third anode gas supply manifold holes 122I, 322I, and 422I to the anode gas reaching portions 21A in the first to third anode separators 19A, 29A, and 39A are referred to as anode gas inlet portions 21B. Also, substantially annular gaps formed between gaskets (e.g., any one of the first gasket 16, the second gasket 28, and the third gasket 38 in Figs. 3, 6, and 8) and the anode-side catalyst layer 2A and the anode-side gas diffusion layer 4A (a substantially annular gap formed between the first to third anode gas supply manifolds 192I, 392I, and 592I, and the anode-side catalyst layer 2A and the anode-side gas diffusion layer 4A as viewed from the direction in which the cells are stacked in the stack 500), are referred to as anode gaps.

As viewed from the direction in which the cells are stacked in the stack 500, the locations of the anode gas reaching portions 21A in the first to third anode separators 19A, 29A, and 39A substantially conform to each other. Therefore, the lengths of the anode gas inlet portions 21B are different among the first to third anode separators 19A, 29A, and 39A.

In a case where there are a number of regions where a part of the anode gas inlet portions 21B are located in close proximity to the anode gaps, the amount of the anode gas leaking from the anode gas inlet portions 21B to the anode gaps tends to be large. The anode gas flowing from the anode gas inlet portion 21B into the anode gap tends to preferentially flow in the anode gap and reach the anode gas discharge manifold hole 22E without flowing in the anode-side catalyst layer 2A and the anode-side gas diffusion layer 4A. For this reason, the anode gas which is discharged without contributing to the power generation tends to be increased. Thus, the utilization efficiency of the anode gas may decrease, and as a result, power generation efficiency may decrease. To reduce the anode gas leaking from the anode gas inlet portions 21B to the anode gaps, it is desirable to minimize the number of regions where a part of the anode gas inlet portions 21B are located in close proximity to the anode gaps. In other words, it is desirable to reduce the length of the anode gas inlet portions 21B. Accordingly, it is desired that the first to third anode gas supply manifolds 192I, 392I, and 592I in the fuel cell system of the present invention which is illustrated in the fifth embodiment be arranged adjacent each other as viewed from the direction in which the cells are stacked in the stack 500.

In the configuration in Fig. 19(a), it is desired that the anode gas supply manifold hole 122I and the through-holes 222I and 522I be formed on the first anode separator 19A so as to be arranged adjacent each other. In the configuration in Fig. 19(b), it is desired that the anode gas supply manifold hole 132I and the through-holes 232I and 532I be formed on the first cathode separator 19C so as to be arranged adjacent each other. In the configuration in Fig. 19(c), it is desired that the anode gas supply manifold hole 322I and the through-hole 522I be formed on the second anode separator 29A so as to be arranged adjacent each other. In the configuration in Fig. 19(d), it is desired that the anode gas supply manifold hole 332I and the through-hole 532I be formed on the second cathode separator 29C so as to be arranged adjacent each other.

In such a configuration, since the length of the anode gas inlet portions 21B can be made sufficiently short, leakage of the anode gas from the anode gas inlet portions 21B into the anode gaps can be sufficiently lessened. In addition, since the difference in length of the anode gas inlet portions 21B among the sub-stack P, Q, and R is small, it is possible to reduce the difference in pressure loss in the anode gas channel grooves 21 among the sub-stacks P, Q, and R can be made small. This makes it easy to design the separators.

It is desired that the first to third cathode gas supply manifolds 193I, 393I, and 593I in the fuel cell system of the present invention which is illustrated in the fifth embodiment be desirably arranged adjacent each other as viewed from the direction in which the cells are stacked in the stack 500.

Hereinafter, the phrase "it is desired that the first to third cathode gas supply manifolds be arranged each other" will be described.

The cathode gas flows from the first to third cathode gas supply manifolds 193I, 393I, and 593I to the cathode gas channel grooves 31 in the first to third cathode separators 19C, 29C, and 39C. Portions of these cathode gas channel grooves 31, where the cathode gas first reaches the cathode-side catalyst layer 2C and the cathode-side gas diffusion layer 4C of the MEA 5, are referred to as cathode gas reaching portions 31A.

Also, portions of the cathode gas channel grooves 31, extending from the first to third cathode gas supply manifold holes 133I, 333I, and 433I to the cathode gas reaching portions 31A in the first to third cathode separators 19C, 29C, and 39C are referred to as cathode gas inlet portions 31B. Also, substantially annular gaps formed between a gasket (e.g., any one of the first gasket 16, the second gasket 28, and the third gasket 38 in Figs. 3, 6, and 8) and the cathode-side catalyst layer 2C and the cathode-side gas diffusion layer 4C (a substantially annular gap formed between the first to third cathode gas supply manifolds 193I, 393I, and 593I, and the cathode-side catalyst layer 2C and the cathode-side gas diffusion layer 4C as viewed from the direction in which the cells are stacked in the stack 500), are referred to as cathode gaps.

As viewed from the direction in which the cells are stacked in the stack 500, the locations of the cathode gas reaching portions 31A in the first to third cathode separators 19C, 29C, and 39C substantially conform to each other. Therefore, the lengths of the cathode gas inlet portions 31B are different among the first to third cathode separators 19C, 29C, and 39C.

In a case where there are a number of regions where a part of the cathode gas inlet portions 31B are located in close proximity to the cathode gaps, the amount of the cathode gas leaking from the cathode gas inlet portions 31B to the cathode gaps tends to be large. The cathode gas flowing from the cathode gas inlet portion 31B into the cathode gap tends to preferentially flow in the cathode gap and reach the cathode gas discharge manifold hole 33E without flowing in the cathode-side catalyst layer 2C and the cathode-side gas diffusion layer 4C. For this reason, the cathode gas which is discharged without contributing to the power generation tends to be increased. Thus, the utilization efficiency of the cathode gas may decrease, and as a result, power generation efficiency may decrease. To reduce the cathode gas leaking from the cathode gas inlet portions 31B to the cathode gaps, it is desirable to minimize the number of regions where a part of the cathode gas inlet portions 31B are located in close proximity to the cathode gaps. In other words, it is desirable to reduce the length of the cathode gas inlet portions 31B. Accordingly, it is desired that the cathode gas supply manifolds 193I, 393I, and 593I in the fuel cell system of the present invention which is illustrated in the fifth embodiment be arranged adjacent each other as viewed from the direction in which the cells are stacked in the stack 500.

In the configuration in Fig. 19(a), it is desired that the anode gas supply manifold hole 122I and the through-holes 222I and 522I be formed on the first anode separator 19A so as to be arranged adjacent each other. In the configuration in Fig. 19(b), it is desired that the anode gas supply manifold hole 132I and the through-holes 232I and 532I be formed on the first cathode separator 19C so as to be arranged adjacent each other. In the configuration in Fig. 19(c), it is desired that the anode gas supply manifold hole 322I and the through-hole 522I be formed on the second anode separator 29A so as to be arranged adjacent each other. In the configuration in Fig. 19(d), it is desired that the anode gas supply manifold hole 332I and the through-hole 532I be formed on the second cathode separator 29C so as to be arranged adjacent each other.

In such a configuration, since the length of the cathode gas inlet portions 31B can be made sufficiently short, leakage of the cathode gas from the cathode gas inlet portions 31B into the cathode gaps can be sufficiently lessened. In addition, since the difference in length of the cathode gas inlet portions 31B among the sub-stack P, Q, and R is small, it is possible to reduce the difference in the pressure loss of the cathode gas channel grooves 31 among the sub-stacks P, Q, and R can be made small. This makes it easy to design the separators.

It is desired that the first to third heat transmission medium supply manifolds 194I, 394I, and 594I in the fuel cell system of the present invention which is illustrated in the fifth embodiment be arranged adjacent each other as viewed from the direction in which the cells are stacked in the stack 500.

Hereinafter, the phrase "it is desired that the first to third heat transmission medium supply manifolds be arranged adjacent each other" will be described.

As viewed from the direction in which the cells are stacked in the stack 500, the cross-section of the heat transmission medium channel grooves 26 in the first anode separator 19A, the cross-section of the heat transmission medium channel grooves 36 in the first cathode separator 19C, the cross-section of the heat transmission medium channel grooves 26 in the second anode separator 29A, the cross-section of the heat transmission medium channel grooves 36 in the second cathode separator 29C, the cross-section of the heat transmission medium channel grooves 26 in the third anode separator 39A, and the cross-section of the heat transmission medium channel grooves 36 in the third cathode separator 39C have substantially the same shape and size. The heat transmission medium channel grooves 26 in the first anode separator 19A, the heat transmission medium channel grooves 26 in the second anode separator 29A, and the heat transmission medium channel grooves 26 in the third anode separator 39A are joined to each other to define a heat transmission medium channel formed by the heat transmission medium channel grooves 26, while the heat transmission medium channel grooves 36 in the first cathode separator 19C, the heat transmission medium channel grooves 36 in the second cathode separator 29C, and the heat transmission medium channel grooves 36 in the third cathode separator 39C are joined to each other to define a heat transmission medium channel formed by the heat transmission medium channel grooves 36.

The heat transmission medium flows from the first to third heat transmission medium supply manifolds 194I, 394I, and 594I through the heat transmission medium channel grooves 26 in the first to third anode separators 19A, 29A, and 39A. Portions of the heat transmission medium channel grooves 26 where the heat transmission medium first reaches portions which are opposite to the anode-side gas diffusion layer 4A of the MEA 5 via the anode separators (any one of the first to third anode separators 19A, 29A, and 39A), are referred to as heat transmission medium reaching portions 26A (not shown).

The heat transmission medium flows from the first to third heat transmission medium supply manifolds 194I, 394I, and 594I through the heat transmission medium channel grooves 36 in the first to third cathode separators 19C, 29C, and 39C. Portions of the heat transmission medium channel grooves 36 where the heat transmission medium first reaches portions which are opposite to the cathode-side gas diffusion layer 4C of the MEA 5 via the cathode separators (any one of the first to third cathode separators 19C, 29C, and 39C), are referred to as heat transmission medium reaching portions 36A (not shown).

Portions of the heat transmission medium channel grooves 26 extending from the first to third heat transmission medium supply manifold holes 124I, 324I and 4241 to the heat transmission medium reaching portions 26A in the first to third anode separators 19A, 29A, and 39A are referred to as heat transmission medium inlet portions 26B(not shown). Portions of the heat transmission medium channel grooves 36 extending from the first to third heat transmission medium supply manifold holes 134I, 334I and 434I to the heat transmission medium reaching portions 36A in the first to third cathode separators 19C, 29C, and 39C are referred to as heat transmission medium inlet portions 36B(not shown).

As viewed from the direction in which the cells are stacked in the stack 500, the locations of the heat transmission medium reaching portions 26A in the first to third anode separators 19A, 29A, and 39A and the locations of the heat transmission medium reaching portions 36A in the first to third cathode separators 19C, 29C, and 39C, substantially conform to each other.

As viewed from the direction in which the cells are stacked in the stack 500, the cross-sections of the heat transmission medium inlet portions 26B in the first to third anode separators 19A, 29A, and 39A and the cross-sections of the heat transmission medium inlet portions 36B in the first to third anode separators 19C, 29C, and 39C have substantially the same shape and size. Hereinafter, the heat transmission medium inlet portions 26B in the first to third anode separators 19A, 29A, and 39A will be described. Since the heat transmission medium inlet portions 36B in the first to third cathode separators 19C, 29C, and 39C are similar to the heat transmission medium inlet portions 26B in the first to third anode separators 19A, 29A, and 39A, they will not be further described.

The lengths of the heat transmission medium inlet portions 26B are different among the first to third anode separators 19A, 29A, and 39A. The heat transmission medium changes its temperature because of heat exchange with ambience as it travels in the heat transmission medium inlet portions 26B. For this reason, there is a tendency that as the difference in length of the heat transmission medium inlet portions 26B among the first to third anode separators 19A, 29A, and 39A increases, the difference in temperature of the heat transmission medium reaching the heat transmission medium reaching portions 26A in the first to third anode separators 19A, 29A, and 39A increases. In a case where the first to third heat transmission medium supply manifolds 194I, 394I, and 594I are not disposed adjacent each other as viewed from the direction in which the cells are stacked in the stack 500, the difference in length of the heat transmission medium inlet portions 26B among the first to third anode separators 19A, 29A, and 39A increases. Because of this, there is a tendency that temperature difference in the heat transmission medium inlet portions 26B among the first to third anode separators 19A, 29A, and 39A becomes large within surfaces of the first to third anode separators 19A, 29A, and 39A. For this reason, temperature control of the heat transmission medium supplied to the sub-stacks P, Q, and R may become complicated.

By reducing the temperature difference in the heat transmission medium inlet portions 26B among the first to third anode separators 19A, 29A, and 39A within surfaces of the first to third anode separators 19A, 29A, and 39A, temperature control of the heat transmission medium supplied to the sub-stacks P, Q, and R can be made easier. Therefore, it is desirable to reduce the length difference in the heat transmission medium inlet portions 26B among the first to third anode separators 19A, 29A, and 39A. That is, it is desired that the first to third heat transmission medium supply manifolds 192I, 394I, and 594I in the fuel cell system of the present invention which is illustrated in the fifth embodiment be arranged adjacent each other as viewed from the direction in which the cells are stacked in the stack 500.

In the configuration in Fig. 19(a), it is desired that the heat transmission medium supply manifold hole 124I and the through-holes 224I and 5241 be formed on the first anode separator 19A so as to be arranged adjacent each other. In the configuration in Fig. 19(b), it is desired that the heat transmission medium supply manifold hole 134I and the through-holes 234I and 534I be formed on the first cathode separator 19C so as to be arranged adjacent each other. In the configuration in Fig. 19(c), it is desired that the heat transmission medium supply manifold hole 324I and the through-hole 524I be formed on the second anode separator 29A so as to be arranged adjacent each other. In the configuration in Fig. 19(d), it is desired that the heat transmission medium supply manifold hole 334I and the through-hole 534I be formed on the cathode separator 29C so as to be arranged adjacent each other.

In such a configuration, the difference in length of the heat transmission medium inlet portions 26B among the first to third anode separators 19A, 29A, and 39A can be sufficiently made small. In other words, the temperature difference in the heat transmission medium reaching portions 26A among the first to third anode separators 19A, 29A, and 39A can be made sufficiently small, and therefore, temperature control for the heat transmission medium becomes easy.

The phrase "the first to third anode gas supply manifolds 192I, 392I, and 592I are arranged adjacent each other as viewed from the direction in which the cells are stacked in the stack 500" means that the first to third anode gas supply manifolds 192I, 392I, and 592I are arranged adjacent each other along the peripheral portions of the separators as viewed from the direction in which the cells are stacked in the stack 500. The first to third anode gas supply manifolds 192I, 392I, and 592I are arranged continuously as viewed from the direction in which the cells are stacked in the stack 500. Between adjacent ones of the first to third anode gas supply manifolds 192I, 392I, and 592I, another kinds of manifolds (first to third cathode gas supply manifolds 193I, 393I, and 593I, first to third heat transmission medium supply manifolds 194I, 394I, and 594I, anode gas discharge manifold 92E, cathode gas discharge manifold 93E, and heat transmission medium discharge manifold 94E) are not disposed.

For example, the anode gas supply manifold hole 122I and the through-holes 222I and 522I may be arranged adjacent each other along one side of the peripheral portion of the anode separator 19A. Alternatively, the anode gas supply manifold hole 122I and the through-holes 222I and 522I may be arranged adjacent each other along adjacent two sides of the peripheral portion of the anode separator 19A and closer to a corner formed by the adjacent two sides. For example, at least one of the anode gas supply manifold hole 122I and the through-holes 222I and 5221 may be arranged along one side of the adjacent two sides and closer to the other side and the remaining ones of the anode gas supply manifold hole 122I and the through-holes 222I and 522I may be arranged along the other side of the adjacent two sides and closer to the one side.

The phrase "the first to third cathode gas supply manifolds 193I, 393I, and 593I are arranged adjacent each other as viewed from the direction in which the cells are stacked in the stack 500" means that the first to third cathode gas supply manifolds 193I, 393I, and 593I are arranged adjacent each other along the peripheral portions of the separators as viewed from the direction in which the cells are stacked in the stack 500, as in the case where the first to third anode gas supply manifolds 192I, 392I, and 592I are arranged adjacent each other. The first to third cathode gas supply manifolds 193I, 393I, and 593I are arranged continuously as viewed from the direction in which the cells are stacked in the stack 500. Between adjacent ones of the first to third cathode gas supply manifolds 193I, 393I, and 593I, another kinds of manifolds (first to third anode gas supply manifolds 192I, 392I, and 592I, first to third heat transmission medium supply manifolds 194I, 394I, and 594I, anode gas discharge manifold 92E, cathode gas discharge manifold 93E, and heat transmission medium discharge manifold 94E) are not disposed.

The phrase "the first to third heat transmission medium supply manifolds 194I, 394I, and 594I are arranged adjacent each other as viewed from the direction in which the cells are stacked in the stack 500" means that the first to third heat transmission medium supply manifolds 194I, 394I, and 594I are arranged adjacent each other along the peripheral portions of the separators as viewed from the direction in which the cells are stacked in the stack 500 as in the case where the first to third anode gas supply manifolds 192I, 392I, and 592I are arranged adjacent each other. The first to third heat transmission medium supply manifolds 194I, 394I, and 594I are arranged continuously as viewed from the direction in which the cells are stacked in the stack 500. Between adjacent ones of the first to third heat transmission medium supply manifolds 194I, 394I, and 594I, another kinds of manifolds (first to third anode gas supply manifolds 192I, 392I, and 592I, first to third cathode gas supply manifolds 193I, 393I, and 593I, anode gas discharge manifold 92E, cathode gas discharge manifold 93E, and heat transmission medium discharge manifold 94E) are not disposed.

### (Embodiment 6)

A stack according to a sixth embodiment of the present invention is an embodiment created by altering the structure of the stack of the fifth embodiment. Since the fuel cell system, and the operation method of the fuel cell system are identical to those of the above described embodiments, they will not be further described.

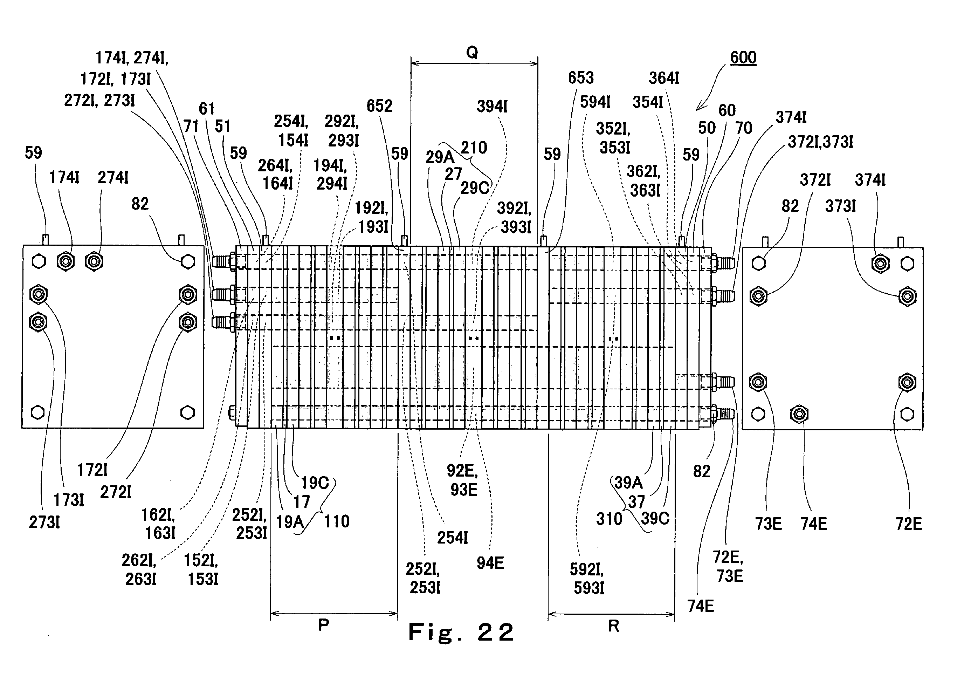

Fig. 22 is a view showing a stack structure of the fuel cell stack according to the sixth embodiment of the present invention, as viewed from three directions. In Fig. 22, a part of the references identical to those of Fig. 1 are omitted.

As shown in Fig. 22, as compared to the sub-stack 500 shown in Fig. 18, the third anode gas supply manifold 592I, the third cathode gas supply manifold 593I, and the third heat transmission medium supply manifold 594I are connected to the third anode gas supply inlet 372I, the third cathode gas supply inlet 373I, and the heat transmission medium supply inlet 374I which are formed on the end plate 70 at the opposite end via the through-holes 352I, 353I, 354I, 362I, 363I, and 364I formed on the insulating plate 60 and the end portion current collector 50. Such a structure makes it possible that the stack 600 omits the second anode gas introduction passage 492I, the second cathode gas introduction passage 493I, and the third heat transmission medium introduction passage 494I. In addition, the stack 600 can omit the through-holes 352I and 353I in the first and second intermediate current collectors 652 and 653. Furthermore, the supply manifold holes, the anode gas channel grooves 21, the cathode gas channel grooves 31 and the heat transmission medium channel grooves 26 and 36 in the third cells 310 in the third sub-stack R may be configured as in the first cells 110 in the first sub-stack R. That is, the locations of the third anode gas supply manifold holes 412I, 422I, and 432I in the third cells 310 are allowed to conform to the locations of the first anode gas supply manifold holes 112I, 122I, and 132I in the first cells 110. The locations of the third cathode gas supply manifold holes 413I, 423I, and 433I in the third cell 310 are allowed to conform to the locations of the first cathode gas supply manifold holes 113I, 123I, and 133I in the first cell 110. The locations of the third heat transmission medium supply manifold holes 414I, 424I, and 434I in the third cells 310 are allowed to conform to the locations of the first heat transmission medium supply manifold holes 114I, 124I, and 134I in the first cells 110.

In the above described manner, the stack 600 makes the structure of the stack 500 simpler and has a common component structure.

It is desired that the first to third anode gas supply manifolds 192I, 392I, and 592I in the fuel cell system of the present invention which is illustrated in the sixth embodiment be arranged adjacent each other as viewed from the direction in which the cells are stacked in the stack 500 as in the case where the first to third anode gas supply manifolds 192I, 392I, and 592I are arranged adjacent each other in the fifth embodiment. It should be noted that the third anode gas supply manifold 592I may at least partially overlap with one of the first and second anode gas supply manifolds 192I and 392I, as viewed from the direction in which the cells are stacked in the stack 500.

It is desired that the first to third cathode gas supply manifolds 193I, 393I, and 593I in the fuel cell system of the present invention which is illustrated in the sixth embodiment be arranged adjacent each other as viewed from the direction in which the cells are stacked in the stack 500 as in the case where the first to third cathode gas supply manifolds 193I, 3931, and 593I are arranged adjacent each other in the fifth embodiment. It should be noted that the third cathode gas supply manifold 593I may at least partially overlap with one of the first and second cathode gas supply manifolds 193I and 393I, as viewed from the direction in which the cells are stacked in the stack 500.

It is desired that the first to third heat transmission medium supply manifolds 194I, 394I, and 594I in the fuel cell system of the present invention which is illustrated in the sixth embodiment be arranged adjacent each other as viewed from the direction in which the cells are stacked in the stack 500 as in the case where the first to third heat transmission medium supply manifolds 194I, 394I, and 594I are arranged adjacent each other in the fifth embodiment. It should be noted that the third heat transmission medium supply manifold 594I may at least partially overlap with one of the first and second heat transmission medium supply manifolds 194I and 394I, as viewed from the direction in which the cells are stacked in the stack 500.

### (Embodiment 7)

A stack according to a seventh embodiment of the present invention is an embodiment created by altering the structure of the stack of the sixth embodiment. Since the fuel cell system, and the operation method of the fuel cell system are identical to those of the above described embodiments, they will not be further described.

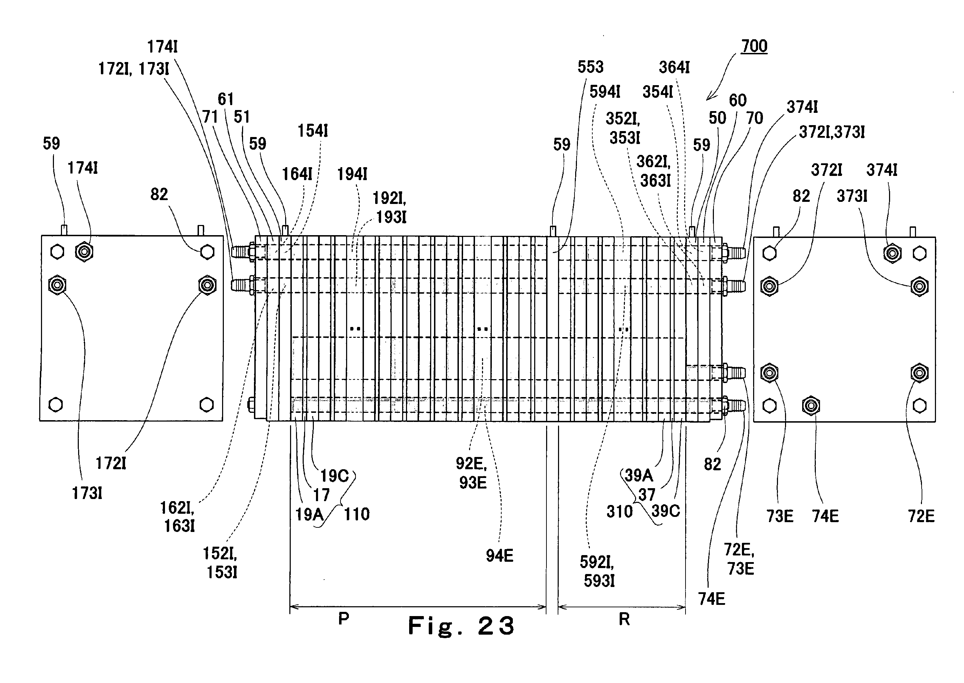

Fig. 23 is a view showing a stack structure of the fuel cell stack according to the seventh embodiment of the present invention, as viewed from three directions. In Fig. 23, a part of the references identical to those of Fig. 22 are omitted.

As shown in Fig. 23, a stack 700 of the present embodiment omits the second sub-stack Q as compared to the sub-stack 600 in Fig. 22, and includes two sub-stacks, i.e., the first sub-stack P and the third sub-stack Q. In other words, in the present embodiment, the first intermediate current collector 552 is omitted and only the second intermediate current collector 553 divides the stack 700 into the two sub-stacks P and R.

The structure of the first cell 110 in the first sub-stack P is identical to the structure of the third cell 310 in the third sub-stack R, and the number of the first cells 110 and the number of the third cells 310 are different from each other. As compared to the stack 600 in Fig. 22, the anode gas introduction passage 2921, the cathode gas introduction passage 293I, the heat transmission medium introduction passage 294I, the second anode gas supply inlet 272I, the second cathode gas supply inlet 273I, and the second heat transmission medium supply inlet 274I are omitted from the first sub-stack P.

In such a configuration, the stack 700 is able to achieve three levels of power generation outputs, i.e., the power generation output only from the first sub-stack P, the power generation output only from the third sub-stack R, and the power generation output from the entire stack.

As described above, the stacks 100, 500, 600 and 700 can cut off the flow of the anode gas and the flow of the cathode gas by using the intermediate current collectors 52 and 53. In other words, the anode gas and the cathode gas are allowed to flow only in desired sub-stacks by utilizing the structure of so-called internal manifold type stack. As a result, the fuel cell stack of the present invention is able to control the power generation output more maneuverably and more economically while suppressing degradation of the MEA.

In the fuel cell stacks 500, 600, and 700 of the present invention, the number of the cells 110 in the first sub-stack P, the number of the cells 210 in the second sub-stack Q, and the number of the cells 310 in the third sub-stack R are different from each other. Therefore, by selecting the sub-stack P, Q or R or by selectively combining them, more power generation levels can be achieved with sub-stacks which are fewer in number. That is, the power generation output can be controlled more maneuverably and more economically controlled while suppressing degradation of the MEA.

The stacks 100, 500, and 700 of the present invention enables the intermediate current collectors 52 and 53 to cut off the flow of the heat transmission medium so that the heat transmission medium flows only in a part of the sub-stacks P, Q, and R. The heat transmission medium is allowed to flow only in desired sub-stacks using the structure of the so-called internal manifold type stack. That is, energy loss of the fuel cell system can be reduced.

The stacks 500 and 600 enable the anode gas, the cathode gas, and the heat transmission medium to flow independently in the sub-stacks P, Q, and R. Therefore, the stacks 500 and 600 make it possible to control the power generation output from the fuel cell stack more maneuverably and more economically.
The fuel cell systems of the present invention which are illustrated in the first, fifth, and sixth embodiments, are capable of selecting one or more of the sub-stacks P, Q, and R based on the magnitude of the external electric power load, and of controlling at least one of the anode gas supply system 42I, the cathode gas supply system 43I, or the anode gas supply on-off unit 182I, the cathode gas supply on-off unit 183, the anode gas introduction on-off unit 282I and the cathode gas introduction on-off unit 283I in the stack 100 to supply the anode gas and the cathode gas only to the selected ones of the sub-stacks P, Q, and R, thereby carrying out the power generation operation. In such a configuration, the power generation output can be controlled more maneuverably and more economically while suppressing degradation of the MEAs in the stacks 100, 500, and 600.

The fuel cell systems of the present invention which are illustrated in the first, fifth and sixth embodiments are capable of controlling at least one of the anode gas supply system 42I, the cathode gas supply system 43I, or the anode gas supply on-off unit 182I, the cathode gas supply on-off unit 183I, the anode gas introduction on-off unit 282I and the cathode gas introduction on-off unit 283I in the stack 100 to supply the anode gas and the cathode gas only to the center portion sub-stack Q, thereby carrying out the center portion power generation, prior to supplying the anode gas and the cathode gas to the end portion sub-stacks P and R, after the power generation start command is received. In such a configuration, since the power generation operation in the center portion in each of the stacks 100, 500, and 600 starts preferentially over the end portion power generation operation, heat generated in the center portion can be used to preheat the end portion sub-stacks P and R at both sides. That is, energy efficiency in a period that lapses until the entire stack power generation starts can be improved.

It is desired that the first and second anode gas supply manifolds 192I and 392I in the fuel cell system of the present invention which is illustrated in the seventh embodiment be arranged adjacent each other as viewed from the direction in which the cells are stacked in the stack 500 as in the case of the first to third anode gas supply manifolds 192I, 392I, and 592I in the fifth embodiment. It should be noted that the second anode gas supply manifold 392I may at least partially overlap with the first anode gas supply manifold 192I, as viewed from the direction in which the cells are stacked in the stack 500.

It is desired that the first and second cathode gas supply manifolds 193I and 393I in the fuel cell system of the present invention which is illustrated in the seventh embodiment be arranged adjacent each other as viewed from the direction in which the cells are stacked in the stack 500 as in the case of the first to third cathode gas supply manifolds 193I, 393I, and 593I in the fifth embodiment. It should be noted that the second cathode gas supply manifold 393I may at least partially overlap with the first cathode gas supply manifold 193I, as viewed from the direction in which the cells are stacked in the stack 500.

It is desired that the first and second heat transmission medium supply manifolds 194I and 394I in the fuel cell system of the present invention which is illustrated in the seventh embodiment be arranged adjacent each other as viewed from the direction in which the cells are stacked in the stack 500 as in the case of the first to third heat transmission medium supply manifolds 194I, 394I, and 594I in the fifth embodiment. It should be noted that the second heat transmission medium supply manifold 394I may at least partially overlap with the first heat transmission medium supply manifold 194I, as viewed from the direction in which the cells are stacked in the stack 500.

Thus far, the embodiments of the present invention have been described in detail. The present invention is not limited to the above described embodiments.

In the above described embodiments, the number of the intermediate current collectors is one or two, but three or more intermediate current collectors may be provided to divide the stack into four or more sub-stacks. With such a configuration, the present invention can be carried out.

For example, the on-off units 182I, 183I, 184I, 282I, 283I and 284I may be configured to open and close the through-holes 152I, 153I, 154I, 252I, 253I, and 254I, respectively. Therefore, the on-off units 182I, 183I, 184I, 282I, 283I and 284I may be formed by incorporating air-tightness gate valves into the first and second intermediate current collectors 52 and 53.

The anode gas introduction on-off unit 282I, the cathode gas introduction on-off unit 283I, and the heat transmission medium introduction on-off unit 284I may be formed by check valves. To be specific, by making connection between the introduction passages 292I, 293I, and 294I and the manifolds 392I, 393I, and 394I only in the flow direction within the stack 100, undesired back flow of the fluid can be prevented in the entire stack preheating step S5 and in the entire stack power generation step S7.

The supply inlets 172I, 173I, 174I, 272I, 273I, and 274I and the discharge outlets 72E, 73E, and 74E may be formed on one of the end plates 70 and 71. For example, the supply inlets 172I, 173I, 174I, 272I, 273I, and 274I and the discharge outlets 72E, 73E, and 74E may be formed on a suitable one of the end plates 70 and 71, according to the locations of the anode gas supply system 42I, the cathode gas supply system 43I, and the heat transmission medium supply system 44I which are attached to the stack 100.

The through-holes 212I, 213I, 214I, 222I, 223I, 224I, 232I, 233I, and 234I may be formed on the third cell 310. Since the second intermediate current collector 53 and the end portion current collector 70 close both ends, the function and advantages of the present invention are not affected. In addition, since the first cells 110 have the same structure as the third cells 310, the first cells 110 and the third cells 310 can be formed by a common manufacturing step. As a result, a manufacturing step of the stack 100 can be simplified.

The stacked portion between the cells may have a structure in which the heat transmission medium channel grooves 26 and 36 are not formed on the separators but heat transmission members internally provided with heat transmission medium channels are provided in the stacked portion between the cells.

### Industrial Applicability

A fuel cell stack, a fuel cell system and an operation method of the fuel cell system of the present invention are able to achieve flow of an anode gas and flow of a cathode gas in a part of the stack with a simple structure. Therefore, the fuel cell stack, the fuel cell system and the operation method of the fuel cell system of the present invention are useful as a fuel cell stack, a fuel cell system and an operation method of the fuel cell system, which are capable of controlling a power generation output more maneuverably and more economically while suppressing degradation of a MEA.

## Claims

1. A fuel cell stack having two or more unit cells stacked between a pair of end portion current collectors and an anode gas supply manifold and a cathode gas supply manifold penetrating peripheral portions of the two or more unit cells in a direction in which the unit cells are stacked, comprising:
one or more intermediate current collectors which are disposed in an intermediate portion between the pair of end portion current collectors in the direction in which the unit cells are stacked and are configured to divide the anode gas supply manifold and the cathode gas supply manifold;
two or more sub-stacks each including one or more of the unit cells stacked between two collectors which are included in the pair of end portion current collectors and the intermediate current collectors;
one or more anode gas supply inlets which penetrate at least one of both end portions of said fuel cell stack in the direction in which the unit cells are stacked and are connected to the anode gas supply manifold in one of said sub-stacks; and
one or more cathode gas supply inlets which penetrate at least one of the both end portions of said fuel cell stack in the direction in which the unit cells are stacked and are connected to the cathode gas supply manifold in one of the sub-stacks.

2. The fuel cell stack according to claim 1, wherein the number of the unit cells is different between the sub-stacks.

3. The fuel cell stack according to claim 1, further comprising:
a heat transmission medium supply manifold which is configured to penetrate the peripheral portions of the two or more unit cells in the direction in which the unit cells are stacked, and is divided by the intermediate current collectors; and
one or more heat transmission medium supply inlets which penetrate at least one of the both end portions of said fuel cell stack in the direction in which the unit cells are stacked and are connected to the heat transmission medium supply manifold in one of said sub-stacks.

4. The fuel cell stack according to claim 3, further comprising:
three or more unit cells and a pair of intermediate current collectors, wherein a center portion sub-stack is disposed between the intermediate current collectors, a pair of end portion sub-stacks are each disposed between the end portion current collector and the intermediate current collector;
an anode gas introduction passage which penetrates a peripheral portion of one of the pair of end portion sub-stacks in the direction in which the unit cells are stacked and is connected to the anode gas supply manifold in the center portion sub-stack;
a cathode gas introduction passage which penetrates a peripheral portion of one of the pair of end portion sub-stacks in the direction in which the unit cells are stacked and is connected to the cathode gas supply manifold in the center portion sub-stack; and
a heat transmission medium introduction passage which penetrates a peripheral portion of one of the pair of end portion sub-stacks in the direction in which the unit cells are stacked and is connected to the heat transmission medium supply manifold in the center portion sub-stack;
wherein three anode gas supply inlets are connected to the anode gas introduction passage, and the anode gas supply manifolds in the pair of end portion sub-stacks, respectively;
wherein three cathode gas supply inlets are connected to the cathode gas introduction passage, and the cathode gas supply manifolds in the pair of end portion sub-stacks, respectively; and
wherein three heat transmission medium supply inlets are connected to the heat transmission medium introduction passage, and the heat transmission medium supply manifolds in the pair of end portion sub-stacks, respectively.

5. The fuel cell stack according to claim 3, further comprising:
three or more unit cells and a pair of intermediate current collectors, wherein a center portion sub-stack is disposed between the intermediate current collectors, and a pair of end portion sub-stacks are each disposed between the end portion current collector and the intermediate current collector;
an anode gas introduction passage which penetrates a peripheral portion of one of the pair of end portion sub-stacks in the direction in which the unit cells are stacked and is configured to connect the anode gas supply manifold in the center portion sub-stack to the anode gas supply inlet;
a cathode gas introduction passage which penetrates a peripheral portion of one of the pair of end portion sub-stacks in the direction in which the unit cells are stacked and is configured to connect the cathode gas supply manifold in the center portion sub-stack to the cathode gas supply inlet;
a heat transmission medium introduction passage which penetrates a peripheral portion of one of the pair of end portion sub-stacks in the direction in which the unit cells are stacked and is configured to connect the heat transmission medium supply manifold in the center portion sub-stack to the heat transmission medium supply inlet;
an anode gas supply on-off unit which is disposed in the intermediate current collector and is configured to make connection and disconnection between the anode gas supply manifold in the center portion sub-stack and the anode gas supply manifold in the end portion sub-stack;
a cathode gas supply on-off unit which is disposed in the intermediate current collector and is configured to make connection and disconnection between the cathode gas supply manifold in the center portion sub-stack and the cathode gas supply manifold in the end portion sub-stack; and
a heat transmission medium supply on-off unit which is disposed in the intermediate current collector and is configured to make connection and disconnection between the heat transmission medium supply manifold in the center portion sub-stack and the heat transmission medium supply manifold in the end portion sub-stack.

6. A fuel cell system comprising:
a fuel cell stack according to claim 1;
an anode gas supply system connected to the anode gas supply inlet;
a cathode gas supply system connected to the cathode gas supply inlet; and
a controller; wherein
said controller is configured to select one or more of said sub-stacks and is configured to control at least one of said anode gas supply system, said cathode gas supply system and said fuel cell stack such that the anode gas and the cathode gas are supplied only to the selected sub-stacks to cause the selected sub-stacks to perform power generation operation.

7. The fuel cell system according to claim 6, wherein said controller is configured to select one or more of said sub-stacks based on a magnitude of an external electric power load such that a power generation output is closest to the electric power load and is configured to control at least one of said anode gas supply system, said cathode gas supply system and said fuel cell stack to switch supply destination of the anode gas and supply destination of the cathode gas, during a power generation operation of said fuel cell system.

8. The fuel cell system according to claim 6,
wherein said fuel cell stack has three or more unit cells and a pair of intermediate current collectors, a center portion sub-stack is disposed between the intermediate current collectors, and a pair of end portion sub-stacks are each disposed between the end portion current collector and the intermediate current collector; and
wherein said controller is configured to control at least one of said anode gas supply system, said cathode gas supply system and said fuel cell stack such that the anode gas and the cathode gas are supplied only to the center portion sub-stack to cause the center portion sub-stack to perform center portion power generation, before supplying the anode gas and the cathode gas to the pair of end portion sub-stacks, after receiving a power generation start command.

9. The fuel cell system according to claim 8, wherein
said fuel cell stack includes a heat transmission supply manifold which is configured to penetrate peripheral portions of the two or more unit cells and is divided by the intermediate current collector; and
one or more heat transmission medium supply inlets which penetrate at least one of both end portions of said fuel cell stack in the direction in which the unit cells are stacked and are connected to the heat transmission medium supply manifold in one of the sub-stacks;
said fuel cell system comprising: a heat transmission medium supply system connected to the heat transmission medium supply inlet; wherein
said controller is configured to control least one of said anode gas supply system, said cathode gas supply system, said heat transmission medium supply system, and said fuel cell stack such that the heat transmission medium is supplied only to the center portion sub-stack to perform center portion preheating, after receiving the power generation start command;
wherein in the center portion preheating, said controller obtains a discharge temperature of the heat transmission medium discharged from said fuel cell stack and performs first determination to compare the discharge temperature to a first determination temperature;
said controller supplies the anode gas and the cathode gas only to the center portion sub-stack to cause the center portion sub-stack to perform center portion power generation, based on the first determination;
in the center portion power generation, said controller supplies the heat transmission medium to an entire of said fuel cell stack such that entire stack preheating is carried out;
in the entire stack preheating, said controller obtains a discharge temperature of the heat transmission medium discharged from said fuel cell stack and performs second determination to compare the discharge temperature to a second determination temperature; and
said controller supplies the anode gas and the cathode gas to the center portion sub-stack and the pair of end portion sub-stacks to cause the center portion sub-stack and the pair of end portion sub-stacks to perform entire stack power generation, based on the second determination.

10. The fuel cell system according to claim 9, wherein the first determination temperature and the second determination temperature are supply temperature of the heat transmission medium supplied to said fuel cell stack.

11. A method of operating a fuel cell system, including
a fuel cell stack according to claim 1;
an anode gas supply system connected to the anode gas supply inlet; and
a cathode gas supply system connected to the cathode gas supply inlet; said method comprising:
selecting one or more of said sub-stacks and supplying the anode gas and the cathode gas only to the selected sub-stacks by using at least one of said anode gas supply system, said cathode gas supply system, and said fuel cell stack.

12. The method of operating the fuel cell system according to claim 11, further comprising:
during a power generation operation of said fuel cell system, selecting one or more of said sub-stacks based on a magnitude of an external electric power load such that a power generation output is closest to the electric power load, and switching supply destination of the anode gas and supply destination of the cathode gas by using at least one of said anode gas supply system, said cathode gas supply system, and said fuel cell stack.

13. The method of operating the fuel cell system according to claim 11,
wherein said fuel cell stack includes three or more unit cells and a pair of intermediate current collectors, wherein a center portion sub-stack is disposed between the intermediate current collectors, a pair of end portion sub-stacks are each disposed between the end portion current collector and the intermediate current collector, said method further comprising:
supplying the anode gas and the cathode gas only to the center portion sub-stack by using at least one of said anode gas supply system, said cathode gas supply system, and said fuel cell stack to cause the center portion sub-stack to perform center portion power generation, before supplying the anode gas and the cathode gas to the pair of end portion sub-stacks, after receiving a power generation start command.
